# EUROPÄISCHE PATENTSCHRIFT

(11) **EP 3 063 455 B1**
(45) Veröffentlichungstag und Bekanntmachung des Hinweises auf die Patenterteilung: **24.01.2018**
(21) Anmeldenummer: 15767095.1
(22) Anmeldetag: 26.08.2015
(51) Int. Cl.: F17C 3/00

(54) **BEHÄLTER ZUM AUFNEHMEN UND SPEICHERN VON FLÜSSIGKEITEN UND VISKOSEN STOFFEN, INSBESONDERE VON KRYOGENEN FLUIDEN, UND VERFAHREN ZU DESSEN HERSTELLUNG SOWIE DESSEN VERWENDUNG**
CONTAINER FOR HOLDING AND STORING LIQUIDS AND VISCOUS SUBSTANCES, IN PARTICULAR CRYOGENIC FLUIDS, AND METHOD FOR THE PRODUCTION THEREOF, AND USE THEREOF
RÉCIPIENT POUR ACCUEILLIR ET STOCKER DES LIQUIDES ET DES SUBSTANCES VISQUEUSES, NOTAMMENT DE FLUIDES CRYOGÈNES, ET PROCÉDÉ DE FABRICATION AINSI QUE D'UTILISATION DE CELUI-CI

(30) Priorität: 09.09.2014 DE 102014112935; 04.03.2015 DE 102015002708
(43) Veröffentlichungstag der Anmeldung: 07.09.2016
(73) Patentinhaber: MT Aerospace AG, 86153 Augsburg (DE)
(72) Erfinder: STACHULLA, Martin, 86517 Wehringen (DE); ZELL, Daniel, 86707 Kühlenthal (DE)
(74) Vertreter: Grape & Schwarzensteiner
(86) Internationale Anmeldenummer: PCT/EP2015/069529
(87) Internationale Veröffentlichungsnummer: WO 2016/037852

(56) Entgegenhaltungen:
- EP-A2- 2 447 544
- GB-A- 2 264 684
- US-A- 5 018 634
- US-A1- 2012 018 587
- US-A1- 2012 193 244

## Beschreibung

Die vorliegende Erfindung betrifft einen Behälter zum Aufnehmen und Speichern von kryogenen Fluiden, insbesondere von kryogenen Flüssigkeiten und viskosen Stoffen, und Verfahren zu dessen Herstellung sowie dessen Verwendung.

Derartige Behälter sind allgemein bekannt. Im Allgemeinen bestehen derartige Behälter, wie beispielsweise in der US 5 018 634 A beschrieben und/oder in der Fig. 9. gezeigt, aus Domen 44, 44', 44'' und zylindrischen Bauteilen 46, 46', die miteinander mittels sogenannten Y-Ringen bzw. Y-förmigen Ringelementen 48, 48', 48'' verschweißt werden. Dabei werden ebenflächige Platten mit einer Dickenkontur gefräst und zu einzelnen Segmenten geschnitten. Diese Segmente werden zum Beispiel durch Kugelstrahl-Umformverfahren geformt. Diese geformten Segmente müssen im Anschluss mittels Schweißens zu kompletten Domen gefügt werden, wobei die Schweißbereiche im Vergleich sehr dick ausfallen, da hier durch das Schweißen sehr schlechte Materialeigenschaften vorliegen. Die zylindrischen Bauteile werden aus ebenflächigen Platten hergestellt, die zunächst auf den benötigten Radius gebogen, im Anschluss maschinell bearbeitet und auf der Innenseite mit Versteifungsrippen versehen. Diese so hergestellten "Face Sheets" werden schließlich mit Längsschweißnähten zu zylindrischen Bauteilen gefügt. Die Y-Ringe werden in aller Regel entweder aus einem Ingot zu großen Ringen gewalzt und im Anschluss über eine aufwendige maschinelle Dreh-/Fräsbearbeitung fertig bearbeitet (so zum Beispiel bei der Ariane 5) oder aus mehreren gebogenen Strangpress-Profilen miteinander verschweißt und im Anschluss maschinell bearbeitet (so zum Beispiel bei dem NASA Space Launch System).

Obgleich sich diese Behälter und deren Herstellungsverfahren in der Vergangenheit durchaus bewährt haben, mussten bis dato aufgrund der Vielzahl von einzelnen Bauteilen wesentliche Nachteile in Kauf genommen werden. Zum einen macht eine solche Vielzahl von einzelnen Bauteilen einerseits und von zum Einsatz kommenden, zum Teil grundlegend unterschiedlichen Fügeverfahren andererseits zusätzliche, nicht unerhebliche Maßnahmen zur Verbesserung der Prozesssicherheit erforderlich, um den gerade in der Luft- und Raumfahrt hohen Güteanforderungen zu genügen. Zum anderen führt eine solche Vielzahl von einzelnen Bauteilen zu einer ausgesprochen arbeits-, sprich personal- und zeitintensiven sowie damit letztlich zu einer besonders kostenaufwendigen Herstellung insgesamt.

Der vorliegenden Erfindung liegt daher die Aufgabe zugrunde, einen Behälter zum Aufnehmen und Speichern von Flüssigkeiten und viskosen Stoffen, insbesondere von kryogenen Fluiden, zur Verfügung zu stellen, mit welchem sich die obigen Nachteile verhindern lassen, welcher mithin konstruktiv besonders einfach, zugleich kompakt und stabil ist, damit einhergehend eine hohe Festigkeit und Steifigkeit aufweist und in der Herstellung ausgesprochen kostengünstig ist, sowie ein Verfahren zu dessen Herstellung sowie dessen Verwendung bereitzustellen.

Diese Aufgabe wird in vorrichtungstechnischer Hinsicht auf überraschend einfache Weise durch die Merkmale des Anspruchs 1 gelöst.

Durch die Ausgestaltung des erfindungsgemäßen Behälters zum Aufnehmen und Speichern von kryogenen Fluiden, insbesondere von kryogenen Flüssigkeiten und viskosen Stoffen, mit einem Mantel, welcher den Innenraum des Behälters mit wenigstens einer Kammer bildet, wobei der Behälter aus wenigstens zwei Behälterstrukturen gebildet ist, wobei die wenigstens zwei Behälterstrukturen jeweils aus einem Rohteil einteilig umgeformt sind und einen Domabschnitt, einen sich an den Domabschnitt anschließenden Verzweigungsabschnitt und zwei an dem Verzweigungsabschnitt anschließende Zylinderabschnitte aufweisen und wobei die jeweils einander benachbart zugewandten Behälterstrukturen miteinander gefügt sind, wird eine besonders einfache, zudem kompakte und stabile Bauweise des Behälters von verhältnismäßig geringem Gewicht erreicht. Der erfindungsgemäße Behälter besteht nur mehr aus sehr wenigen, zudem beliebig und jederzeit normierbaren einzelnen Bauteilen, die mittels weniger Umformungsschritte fügbar sind. Nicht zuletzt hieraus resultierend weist der erfindungsgemäße Behälter zugleich eine ausgesprochen hohe Festigkeit und Steifigkeit auf. Schließlich gestaltet sich die Herstellung des erfindungsgemäßen Behälters auf diese Weise besonders einfach und wenig arbeits- wie zeitintensiv und ist somit ausgesprochen kostengünstig.

Weitere vorteilhafte Einzelheiten des erfindungsgemäßen Behälters sind in den Ansprüchen 2 bis 9 beschrieben.

In weiterer Ausgestaltung umfasst der erfindungsgemäße Behälter nach Anspruch 2 einen Mantel und vorzugsweise mindestens eine Trennwand, welche den Innenraum des Behälters in wenigstens zwei einander benachbarte Kammern unterteilt, wobei der Behälter aus wenigstens drei Behälterstrukturen gebildet ist und wobei die wenigstens drei Behälterstrukturen jeweils aus einem Rohteil einteilig umgeformt sind und einen Domabschnitt, einen sich an den Domabschnitt anschließenden Verzweigungsabschnitt und zwei an dem Verzweigungsabschnitt anschließende Zylinderabschnitte aufweisen und wobei die jeweils einander benachbart zugewandten Behälterstrukturen miteinander gefügt sind.

Um die Anpassungsfähigkeit der Form des Behälters an die individuellen konstruktiven Gegebenheiten und Vorgaben zu vereinfachen und zu verbessern sowie zugleich die Variationsmöglichkeiten grundlegend zu erhöhen, sind die Maßnahmen des Anspruchs 3, wonach das Rohteil plan, ebenflächig oder dergleichen, vorzugsweise im Wesentlichen kreis- oder scheibenförmig, oder zylindrisch bzw. zylinderförmig, insbesondere in Form eines Zylinders, ausgebildet ist, von besonderer Bedeutung. Ganz bevorzugt ist dabei ein kurzer Zylinder.

Von großer Bedeutung für eine ausgesprochen einfache und damit kostengünstige Bauweise und eine hohe Funktionszuverlässigkeit in mechanischer Hinsicht zum einen sowie eine besonders vielseitige und gleichermaßen individuelle Anpassungsmöglichkeit an konstruktive Gegebenheiten und Vorgaben zum anderen sind die Merkmale des Anspruchs 4. Danach sind die jeweils einander benachbarten Behälterstrukturen miteinander unmittelbar und/ oder mittelbar über mindestens ein weiteres Zylinderelement gefügt.

Von gleichermaßen großem Interesse, um eine ausgesprochen einfache, kompakte und funktionssichere Bauweise mit einer einhergehenden erheblichen Kostenreduzierung bzw. -einsparung zu ermöglichen, sind die konstruktiven Maßnahmen des Anspruchs 5. Demzufolge sind die jeweils einander benachbarten Behälterstruktur/en und/oder das mindestens ein weitere Zylinderelement miteinander (fließ-)gedrückt, bzw. gedrückt oder fließgedrückt, oder verschweißt.

In vorteilhafter Weise ist/sind der Behälter, insbesondere die Behälterstruktur/en und/oder das mindestens eine weitere Zylinderelement des Behälters, entsprechend den Maßnahmen des Anspruchs 6 leichtbauend ausgebildet.

Weiterhin ist erfindungsgemäß vorgesehen, dass der Behälter, insbesondere die Behälterstruktur/en und/oder das mindestens eine weitere Zylinderelement des Behälters, nach Anspruch 7 aus Metall, insbesondere aus Stahl, Edelstahl, Aluminium, Titan, einer Legierung daraus und/oder einer Kombination daraus gebildet ist/sind.

Als zweckmäßig hat sich darüber hinaus erwiesen, dass der Domabschnitt der Behälterstruktur/en nach Anspruch 8 schalenförmig, insbesondere halbkugelförmig, kugelkappenförmig, kalottenförmig, ellipsoidkallotenförmig, konisch, elliptisch, in Cassini-Form oder mit anderen Querschnittsformen ausgebildet ist.

Von weiterhin großer Bedeutung für eine erhöhte Festigkeit und Steifigkeit sind die Merkmale des Anspruchs 9, wonach der/die Zylinderabschnitt/e der Behälterstruktur/en und/oder das mindestens eine weitere Zylinderelement des Behälters versteift sind. Dazu eignen sich Versteifungen, alternativ oder kumulativ vorzugsweise in Form von (Versteifungs-)Rippen, Rippen, Versteifungsrippen, Stringern und/oder Isogrid- oder Orthogrid-Strukturen, die außen- und/oder innenseitig, ganz bevorzugt innenseitig, angeordnet sind. Auf diese Weise lassen sich erhebliche Gewichtseinsparungen erreichen, ohne die Festigkeit und Steifigkeit des Behälters zu beeinträchtigen, wodurch die in der Luft- und Raumfahrt herrschenden Anforderungen bezüglich Leichtbaukriterien in besonders effizienter Art und Weise erfüllt werden.

Diese Aufgabe wird weiterhin in verfahrenstechnischer Hinsicht auf überraschend einfache Weise durch die Merkmale der Ansprüche 10 und 11 gelöst.

Durch die Ausgestaltung der erfindungsgemäßen Verfahren zum Herstellen eines Behälters zum Aufnehmen und Speichern von kryogenen Fluiden, insbesondere von kryogenen Flüssigkeiten und viskosen Stoffen, mit einem Mantel, welcher den Innenraum des Behälters mit wenigstens einer Kammer bildet, oder mit einem Mantel und mindestens einer Trennwand, welche den Innenraum des Behälters in wenigstens zwei einander benachbarte Kammern unterteilt, umfassend folgende Schritte:
a) Bereitstellen eines Rohteils,
b) Einspannen des Rohteils an oder in mindestens einer Tragstruktur oder Drückform,
c) Verformen des Rohteils durch Spinformen zu einem Domabschnitt einer Behälterstruktur,
d) Verformen eines Randes des Rohteils zu einem sich an den Domabschnitt anschließenden Verzweigungsabschnitt und zwei an dem Verzweigungsabschnitt anschließende, sich im Wesentlichen radial erstreckende Zylinderabschnitte der Behälterstruktur durch Aufspalten mittels einer den Rand des Rohteils beaufschlagenden Spaltrolle,
e) (Fließ-)Drücken bzw. Drücken oder Fließdrücken der zwei sich an dem Verzweigungsabschnitt anschließenden, sich im Wesentlichen radial erstreckenden Zylinderabschnitte der Behälterstruktur zu zwei sich axial erstreckenden Zylinderabschnitten der Behälterstruktur,
f) Bilden von wenigstens einer oder zwei weiteren Behälterstruktur/en gemäß den Schritten a) bis e),
g) Fügen der jeweils einander benachbart zugewandten Behälterstrukturen miteinander zu einem Behälter,
bzw. alternativ umfassend folgende Schritte:
a) Bereitstellen eines Rohteils,
b) Einspannen des Rohteils an oder in mindestens einer Tragstruktur oder Drückform,
c) Verformen eines Randes des Rohteils zu einem Verzweigungsabschnitt und zwei an dem Verzweigungsabschnitt anschließende, sich im Wesentlichen radial erstreckende Zylinderabschnitte einer Behälterstruktur durch Aufspalten mittels einer den Rand des Rohteils beaufschlagenden Spaltrolle,
d) Verformen des Rohteils durch Spinformen zu einem sich an den Verzweigungsabschnitt anschließenden Domabschnitt der Behälterstruktur,
e) (Fließ-)Drücken bzw. Drücken oder Fließdrücken der zwei sich an dem Verzweigungsabschnitt anschließenden, sich im Wesentlichen radial erstreckenden Zylinderabschnitte der Behälterstruktur zu zwei sich axial erstreckenden Zylinderabschnitten der Behälterstruktur nach Schritt c) oder d),
f) Bilden von wenigstens einer oder zwei weiteren Behälterstruktur/en gemäß den Schritten a) bis e),
g) Fügen der jeweils einander benachbart zugewandten Behälterstrukturen miteinander zu einem Behälter,
sind erfindungsgemäß Verfahren vorgeschlagen, welche sich neben den bereits im Zusammenhang mit dem Behälter nach der Erfindung beschrieben Vorteilen als besonders vorteilhaft erweisen. So ermöglichen die erfindungsgemäßen Verfahren die Herstellung eines Behälters mit einer besonders einfachen, zudem kompakten und stabilen Bauweise und von geringem Gewicht. Mit den erfindungsgemäßen Verfahren lässt sich zudem in sehr vorteilhafter Weise ein Behälter erhalten, der nur mehr aus sehr wenigen, zudem beliebig und jederzeit normierbaren einzelnen Bauteilen besteht. In diesem Zusammenhang ist zugleich eine Erzeugung beliebig unterschiedlicher Querschnittsgeometrien in der/den Behälterstruktur/en, die gleichzeitig zur strukturellen Versteifung genutzt werden können, ermöglicht. Von besonderem Vorteil zeichnen sich die erfindungsgemäßen Verfahren zudem dadurch aus, dass der Behälter zum einen mittels weniger Umformungsschritte fügbar ist und zum anderen Schweiß- oder sonstige Fügemaßnahmen, die ursächlich für Verzüge und Materialschwächungen (Schweißgütefaktor) sind, vermieden werden. Nicht zuletzt hieraus resultierend weist der durch die erfindungsgemäßen Verfahren hergestellte Behälter eine ausgesprochen hohe Festigkeit und Steifigkeit auf. Schließlich gestaltet sich die Herstellung des erfindungsgemäßen Behälters durch Anwendung der erfindungsgemäßen Verfahren besonders einfach und wenig arbeits- wie zeitintensiv und ist somit ausgesprochen kostengünstig.

Weitere vorteilhafte Einzelheiten der erfindungsgemäßen Verfahren sind in den Ansprüchen 12 bis 21 beschrieben.

So ist in bevorzugter Ausgestaltung der Erfindung nach Anspruch 12 vorgesehen, dass das in Schritt a) bereitzustellende Rohteil plan, ebenflächig oder dergleichen, vorzugsweise im Wesentlichen kreis- oder scheibenförmig, oder zylindrisch bzw. zylinderförmig, insbesondere in Form eines, vorzugsweise kurzen, Zylinders, ausgebildet wird.

Vorzugsweise wird das Rohteil nach Anspruch 13 dabei durch Trennen, insbesondere durch mechanisches Schneiden, Schneiden mittels Laser oder Wasserstrahl, Sägen, Fräsen oder Erodieren, herausgearbeitet.

Darüber hinaus sind die Merkmale des Anspruchs 14 für den Erhalt einer gewünschten Endwanddicke des Domabschnittes der Behälterstruktur von besonderem Interesse. Demnach wird das Rohteil, bevorzugt vor dem Einspannen und insbesondere vor dem Verformen, durch Spanabhebung, insbesondere durch Drehen, Fräsen und/oder Schleifen, (vor-)konturiert bzw. vorkonturiert oder konturiert, also mit einer vorbestimmten Wanddickenverteilung im ebenen Zustand versehen. Durch (Vor-)Konturieren bzw. Vorkonturieren oder Konturieren der Ausgangsdicke vor dem Verformen lässt sich die Endwanddicke der Behälterstruktur exakt einstellen.

Des Weiteren liegt es im Rahmen der Erfindung, dass das Rohteil und/oder die Behälterstruktur nach Anspruch 15 an oder in der mindestens einen Tragstruktur oder Drückform und einer damit zusammenwirkenden weiteren Tragstruktur oder Drückform eingespannt wird.

Von weiterhin großer Bedeutung für eine wirtschaftliche, ausgesprochen große Form- und Maßgenauigkeit des hergestellten Schalenkörpers und eine weiter erhöhte Festigkeit sind die Merkmale des Anspruchs 16. Danach wird der Domabschnitt der Behälterstruktur durch konvexes oder konkaves Spinformen oder Drücken geformt, bevorzugt durch konkaves Drücken bzw. Spinformen zu dem Schalenkörper verformt.

Zusätzlich ist erfindungsgemäß vorgesehen, dass der Verzweigungsabschnitt und die zwei Zylinderabschnitte der Behälterstruktur nach Anspruch 17 durch Aufspalten mittels einer den Rand des Rohteils beaufschlagenden Spaltrolle mit im Wesentlichen kegelförmigem, rautenförmigem oder scharfkantigem Querschnitt geformt werden.

In diesem Zusammenhang werden die zwei sich an dem Verzweigungsabschnitt anschließenden Zylinderabschnitte der Behälterstruktur entsprechend Anspruch 18 vorzugsweise nach dem Aufspalten mittels der den Rand des Rohteils beaufschlagenden Spaltrolle aus der im Wesentlichen radialen Erstreckung zu zwei sich axial erstreckenden Zylinderabschnitte der Behälterstruktur, insbesondere oberhalb und unterhalb des Domabschnittes und des sich an den Domabschnitt anschließenden Verzweigungsabschnittes, (fließ-)gedrückt bzw. gedrückt oder fließgedrückt.

Vorzugsweise werden die jeweils einander benachbarten Behälterstrukturen nach Anspruch 19 miteinander unmittelbar gefügt. Alternativ oder kumulativ dazu ist es jedoch ohne weiteres möglich, die jeweils einander benachbarten Behälterstrukturen mittelbar über mindestens ein weiteres Zylinderelement zu fügen. Damit lassen sich Form und Geometrie des Behälters oder sonstige konstruktiven Gegebenheiten individuell, beliebig und vielseitig ausbilden.

Darüber hinaus ist in vorteilhafter Weise vorgesehen, dass der/die Zylinderabschnitt/e der Behälterstruktur/en und/oder das mindestens eine weitere Zylinderelement des Behälters nach Anspruch 20 versteift werden, insbesondere durch innenseitige Versteifungen, alternativ oder kumulativ vorzugsweise in Form von (Versteifungs-)Rippen, Rippen, Versteifungsrippen, Stringern und/oder Isogrid- oder Orthogrid-Strukturen, die außen-und/oder innenseitig, jedoch ganz bevorzugt innenseitig, angeordnet sind.

Von großem Interesse für eine ausgesprochen einfache, kompakte und funktionssichere Bauweise mit einer einhergehenden erheblichen Kostenreduzierung bzw. -einsparung sind darüber hinaus die Maßnahmen des Anspruchs 21, wonach die jeweils einander benachbarten Behälterstrukturen und/oder das mindestens eine weitere Zylinderelement miteinander (fließ-)gedrückt bzw. gedrückt oder fließgedrückt oder verschweißt, insbesondere durch Rührreibschweißen (Friction-Stir-Welding bzw. FSW), gefügt werden.

Schließlich liegt es noch im Rahmen der Erfindung, den erfindungsgemäßen Behälter zum Aufnehmen und Speichern von Flüssigkeiten und viskosen Stoffen, insbesondere von kryogenen Fluiden, vorzugsweise von Sauerstoff und Wasserstoff, nach Anspruch 22 in Fahrzeugen, insbesondere in Luftfahrzeugen oder Fluggeräten der Luft- und Raumfahrt, vorzugsweise in Flugzeugen und Raumflugkörpern, insbesondere in Wasserfahrzeugen, vorzugsweise in einem U-Boot oder Luftkissenfahrzeug (Hovercraft), oder insbesondere in Landfahrzeugen, vorzugsweise in einem Personenkraftwagen, Lastkraftwagen oder Wohnmobil, zu verwenden.

Ganz besonders eignet sich der erfindungsgemäße Behälter nach Anspruch 23 zum Aufnehmen und Speichern von Flüssigkeiten und viskosen Stoffen, insbesondere von kryogenen Fluiden, und von gasförmigen, flüssigen und festen Medien, vorzugsweise von Treib- oder Kraftstoffen, wie Hydrazin, Monomethylhydrazin (MMH), unsymmetrischen Dimethlyhydrazin (UDMH) oder Kerosin, Oxidationsmitteln (Oxidatoren), wie Stickstofftetroxiden oder Distickstofftetroxiden (NTO), oder Treibstoff/Oxidator-Gemischen und/oder Wasser, Trinkwasser, Brauchwasser oder Abwasser, für Tanks und Treibstofftanks von Raketen und/oder Satelliten.

Weitere Merkmale, Vorteile und Einzelheiten der Erfindung ergeben sich aus der nachfolgenden Beschreibung von einigen bevorzugten Ausführungsformen der Erfindung sowie anhand der Zeichnungen. Hierbei zeigen:
- Fig. 1: eine schematische Längsschnittansicht durch eine Ausführungsform eines erfindungsgemäß ausgebildeten Behälters,
- Fig. 2A und 2B: schematische Längsschnittansichten durch andere Ausführungsformen von erfindungsgemäß ausgebildeten Behältern,
- Fig. 3: eine teilweise aufgebrochene, perspektivische Ansicht einer Ausführungsform einer erfindungsgemäß ausgebildeten Behälterstruktur, in vergrößerter Darstellung,
- Fig. 4: eine schematische, perspektivische Schnittansicht der Ausführungsform der erfindungsgemäß ausgebildeten Behälterstruktur nach der Fig. 3, in verkleinerter Darstellung,
- Fig. 5A bis 5J: verschiedene Schnittansichten und jeweils dazugehörige perspektivische Ansichten eines Rohteils und einer Behälterstruktur zur schematischen Veranschaulichung eines erfindungsgemäßen Verfahrens zur Herstellung einer erfindungsgemäß ausgebildeten Behälterstruktur,
- Fig. 6A: bis 6L verschiedene Schnittansichten und jeweils dazugehörige perspektivische Ansichten eines Rohteils und einer Behälterstruktur zur schematischen Veranschaulichung eines anderen erfindungsgemäßen Verfahrens zur Herstellung einer erfindungsgemäß ausgebildeten Behälterstruktur,
- Fig. 7A bis 7J: verschiedene Schnittansichten und jeweils dazugehörige perspektivische Ansichten eines zylindrischen Rohteils und einer Behälterstruktur zur schematischen Veranschaulichung eines weiteren erfindungsgemäßen Verfahrens zur Herstellung einer erfindungsgemäß ausgebildeten Behälterstruktur entsprechend den Fig. 5A bis 5J,
- Fig. 8A bis 8L: verschiedene Schnittansichten und jeweils dazugehörige perspektivische Ansichten eines zylindrischen Rohteils und einer Behälterstruktur zur schematischen Veranschaulichung eines noch anderen erfindungsgemäßen Verfahrens zur Herstellung einer erfindungsgemäß ausgebildeten Behälterstruktur entsprechend den Fig. 6A bis 6L, und
- Fig. 9: eine teilweise abgebrochene, auseinandergezogene Längsschnittansicht durch einen im Stand der Technik bekannten Behälter.

Bei der nachfolgenden Beschreibung von verschiedenen Ausführungsformen eines erfindungsgemäßen Behälters 10 zum Aufnehmen und Speichern von Flüssigkeiten und viskosen Stoffen, insbesondere von kryogenen Fluiden, und von Verfahren zu deren Herstellung sind einander entsprechende, gleiche Bauteile jeweils mit identischen Bezugsziffern versehen.

Der erfindungsgemäße Behälter 10 zum Aufnehmen und Speichern von Flüssigkeiten und viskosen Stoffen, insbesondere von kryogenen Fluiden, vorzugsweise von Sauerstoff und Wasserstoff, findet in vorteilhafter Weise in Fahrzeugen, insbesondere in Luftfahrzeugen oder Fluggeräten der Luft- und Raumfahrt, vorzugsweise in Flugzeugen und Raumflugkörpern, insbesondere in Wasserfahrzeugen, vorzugsweise in einem U-Boot oder Luftkissenfahrzeug (Hovercraft), oder insbesondere in Landfahrzeugen, vorzugsweise in einem Personenkraftwagen, Lastkraftwagen oder Wohnmobil, Verwendung. In ganz besonderem Maße lässt sich der erfindungsgemäße Behälter 10 für ein Fluggerät der Luft- und Raumfahrt, wie etwa Tanks und Treibstofftanks von Raketen und/oder Satelliten, einsetzen, um Flüssigkeiten und viskose Stoffe, insbesondere von kryogenen Fluide, und gasförmige, flüssige und feste Medien, vorzugsweise von Treib- oder Kraftstoffen, wie Hydrazin, Monomethylhydrazin (MMH), unsymmetrischen Dimethlyhydrazin (UDMH) oder Kerosin, Oxidationsmitteln (Oxidatoren), wie Stickstofftetroxiden oder Distickstofftetroxiden (NTO), oder Treibstoff/Oxidator-Gemischen und/oder Wasser, Trinkwasser, Brauchwasser oder Abwasser, aufzunehmen, zu speichern und abzugeben.

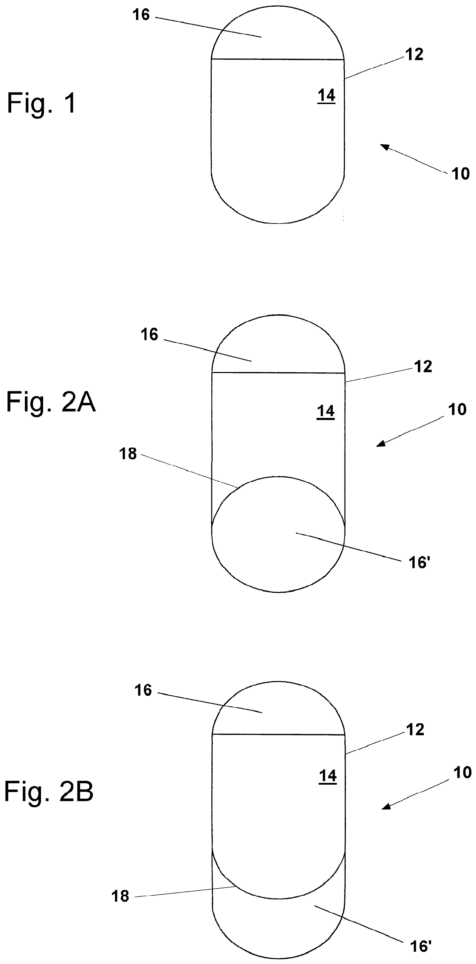

Der in der Fig. 1 schematisch dargestellte Behälter 10 nach der Erfindung umfasst einen, insbesondere dünnwandigen, Mantel 12, welcher den Innenraum 14 des Behälters 10 mit wenigstens einer Kammer 16 bildet. In der Kammer 16 sind zum Beispiel kryogene Fluide, wie Sauerstoff (LOX) und Wasserstoff (LH2), aufgenommen und gespeichert, die als Treibstoff/Oxidator-Gemisch einer Oberstufe einer Trägerrakete (jeweils nicht dargestellt) Verwendung finden.

Die in den Fig. 2A und 2B schematisch dargestellten Behälter 10 nach der Erfindung umfassen einen, insbesondere dünnwandigen, Mantel 12 und mindestens eine Trennwand 18. Die mindestens eine Trennwand 18 unterteilt den Innenraum 14 des Behälters 10 in wenigstens zwei einander benachbarte Kammern 16, 16'. In den Kammern 16, 16' sind zum Beispiel kryogene Fluide, wie Sauerstoff (LOX) und Wasserstoff (LH2), aufgenommen und gespeichert, die als Treibstoff/Oxidator-Gemisch einer Oberstufe einer Trägerrakete (jeweils nicht dargestellt) Verwendung finden.

Entsprechend den Fig. 2A und 2B weisen beide Behälter 10 jeweils nur eine einzige Trennwand 18 zur Unterteilung des Innenraumes 14 in zwei gesonderte Kammern 16, 16' auf. Die Trennwand 18 ist den zwei Kammern 16, 16' des Behälters 10 gemeinsam.

Die in den Fig. 2A und 2B dargestellten Ausführungsformen des erfindungsgemäßen Behälters 10 unterscheiden sich lediglich in der Ausbildung der Trennwand 18 selbst bzw. der Anordnung der Trennwand 18 innerhalb des Mantels 12 des Behälters 10. So ist die Trennwand 18 bei der Ausführungsform des Behälters 10, die in der Fig. 2A dargestellt ist, konkav ausgebildet. Demgegenüber ist die Trennwand 18 bei der Ausführungsform des Behälters 10, die in der Fig. 2B gezeigt ist, konvex ausgestaltet. Im Übrigen stimmen die zwei Ausführungsformen der Trennwand 18 des erfindungsgemäßen Behälters 10 nach den Fig. 2A und 2B in konstruktiver Hinsicht überein.

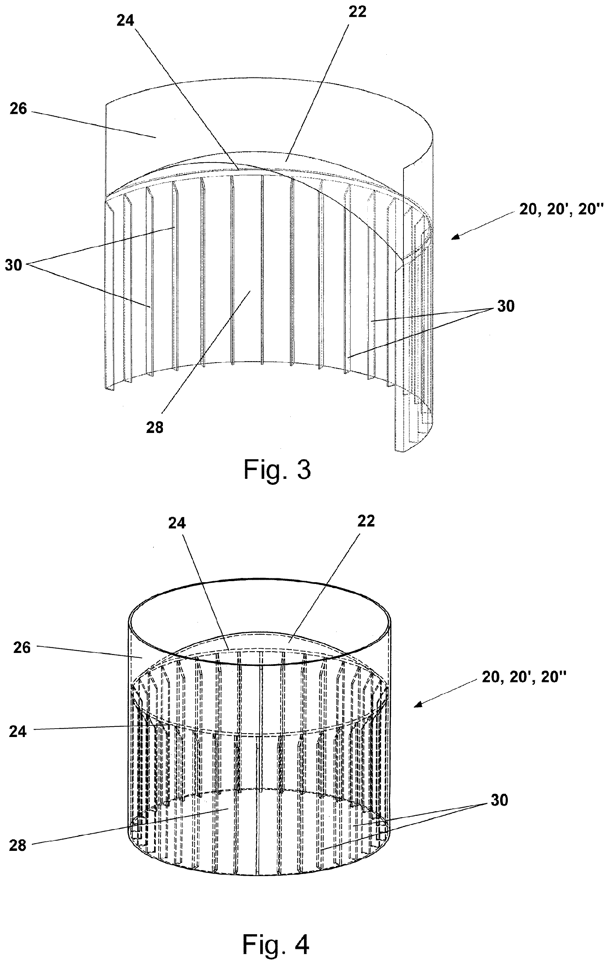

Die Ausführungsform des erfindungsgemäßen Behälters 10 nach der Fig. 1 ist aus wenigstens zwei Behälterstrukturen 20, 20' bzw. 20', 20'' gebildet, wovon eine in den Fig. 3 und 4 dargestellt ist.

Die Ausführungsformen des erfindungsgemäßen Behälters 10 nach den Fig. 2A und 2B sind dagegen jeweils aus wenigstens drei Behälterstrukturen 20, 20', 20'' gebildet, wovon eine in den Fig. 3 und 4 dargestellt ist.

Wie aus den Fig. 3 und 4 hervorgeht, ist/sind die Behälterstruktur/en 20, 20', 20'' jeweils aus einem Rohteil (nicht dargestellt) einteilig umgeformt. Die Behälterstruktur/en 20, 20', 20'' weist/weisen jeweils einen Domabschnitt 22, einen sich an den Domabschnitt 22 anschließenden Verzweigungsabschnitt 24 und zwei an dem Verzweigungsabschnitt 24 anschließende Zylinderabschnitte 26, 28 auf.

Ohne im Einzelnen dargestellt zu sein, sind die jeweils einander benachbart zugewandten Behälterstrukturen 20, 20' bzw. 20', 20'' der Behälterstrukturen 20, 20', 20'' miteinander gefügt, um den Behälter 10 zu bilden, sofern der Behälter 10 entsprechend der Fig. 1 eine Kammer 16 oder entsprechend den in den Fig. 2A bis 8L gezeigten Ausführungsbeispielen eine Trennwand 18 zur Ausbildung von zwei Kammern 16, 16' umfasst.

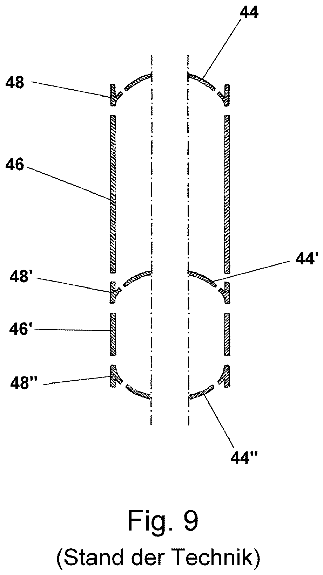

Die jeweils einander benachbarten Behälterstrukturen 20, 20' bzw. 20', 20'' sind miteinander unmittelbar und/oder mittelbar über mindestens ein weiteres, zusätzliches Zylinderelement 46, 46' (wie bereits in der Fig. 9 gezeigt) gefügt. Dabei sind die jeweils einander benachbarten Behälterstrukturen 20, 20' bzw. 20', 20'' und/oder das mindestens eine weitere Zylinderelement 46, 46' miteinander vorzugsweise (fließ-)gedrückt bzw. gedrückt oder fließgedrückt oder verschweißt.

Der Behälter 10, insbesondere die wenigstens zwei oder drei Behälterstrukturen 20, 20', 20'' und/oder das mindestens eine weitere Zylinderelement 46, 46' des Behälters 10, ist/sind darüber hinaus leichtbauend ausgebildet. Vorzugsweise sind diese aus Metall, insbesondere aus Stahl, Edelstahl, Aluminium, Titan, einer Legierung daraus und/oder einer Kombination daraus gebildet.

Der Domabschnitt 22 der Behälterstruktur/en 20, 20', 20'' ist jeweils schalenförmig, insbesondere halbkugelförmig, kugelkappenförmig, kalottenförmig, ellipsoidkallotenförmig, konisch, elliptisch, in Cassini-Form oder mit anderen Querschnittsformen ausgebildet. Der/die Zylinderabschnitt/e 26, 28 der Behälterstruktur/en 20, 20', 20'' und/oder das mindestens eine weitere Zylinderelement 46, 46' des Behälters 10 sind versteift. In vorteilhafter Weise sind dazu Versteifungen 30 in Form von (Versteifungs-)Rippen, Rippen, Versteifungsrippen, Stringern und/oder Isogrid- oder Orthogrid-Strukturen vorgesehen.

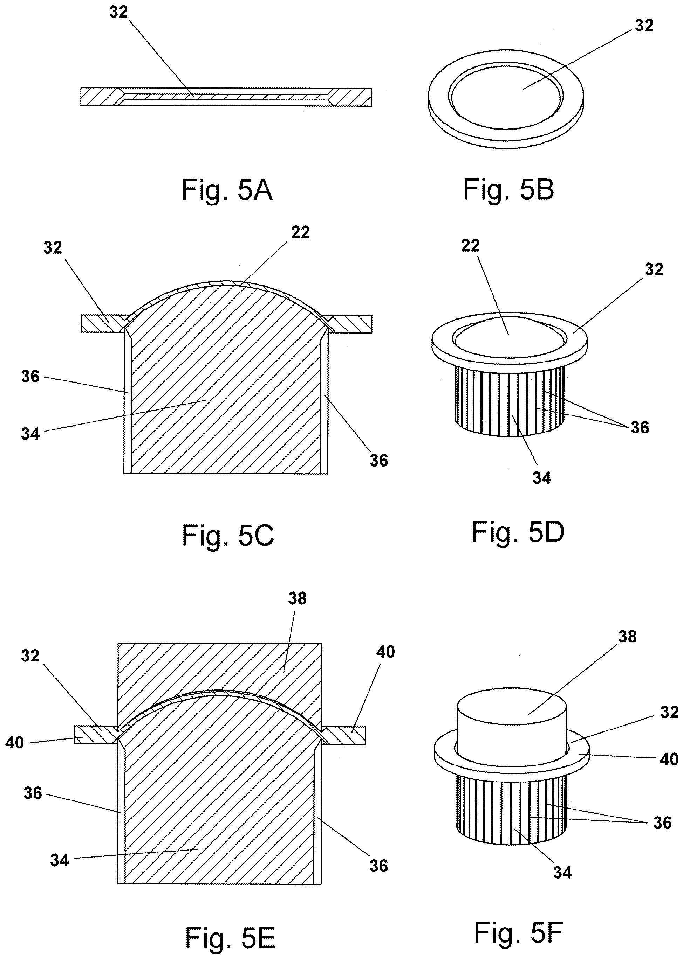

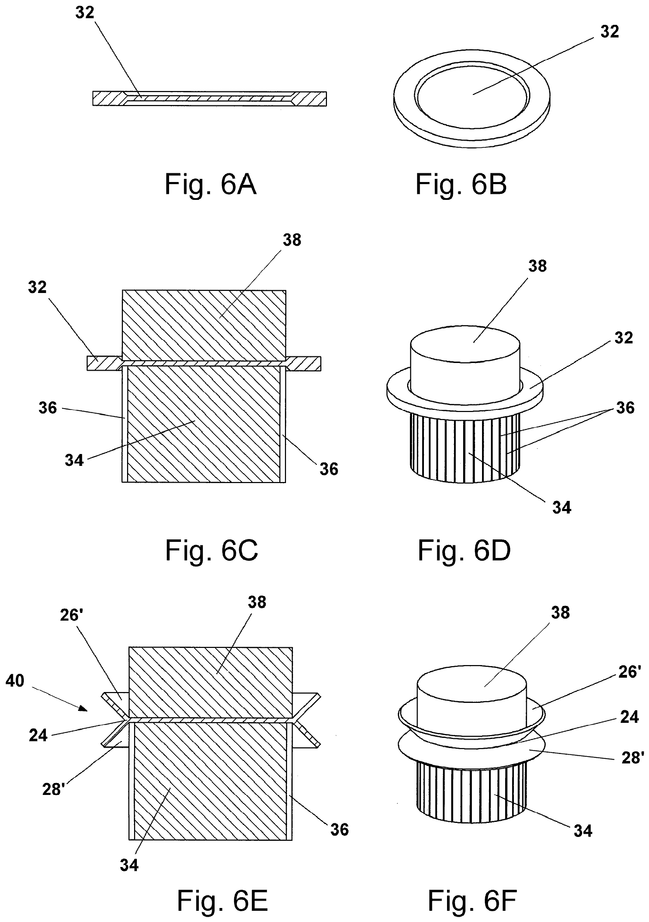

Die Herstellung der in den Fig. 1 bis 4 dargestellten Ausführungsformen des erfindungsgemäßen Behälters 10 wird nachfolgend anhand der Fig. 5A bis 5J bzw. alternativ anhand der Fig. 6A bis 6L näher erläutert:
Entsprechend den Fig. 5A bis 5J umfasst eine Ausführungsform eines erfindungsgemäßen Verfahrens zum Herstellen eines Behälters 10 folgende Schritte:
   Gemäß den Fig. 5A und 5B wird ein Rohteil 32 bereitgestellt. Das Rohteil 32 ist bevorzugt plan, ebenflächig bzw. weitgehend ebenflächig oder dergleichen ausgebildet. Dabei ist das Rohteil 32 vorzugsweise im Wesentlichen kreis- oder scheibenförmig oder kreis- oder scheibenförmig. Das Rohteil 32 wird insbesondere aus einem ebenflächigen Rohteil (nicht näher dargestellt), zum Beispiel einem Blechzuschnitt aus Metall oder dergleichen, durch Trennen, insbesondere durch mechanisches Schneiden, Schneiden mittels Laser oder Wasserstrahl, Sägen, Fräsen oder Erodieren, herausgearbeitet.

Das Rohteil 32 wird in bevorzugter Weise noch zuvor durch Spanabhebung, insbesondere durch Drehen, Fräsen und/oder Schleifen, (vor-)konturiert, bzw. vorkonturiert oder konturiert. Gleichermaßen ist es jedoch möglich, das Rohteil 32 selbst mit einer Konturierung zu versehen. Beispielsweise kann das Rohteil 32 auch durch Walzen ausgebildet sein.

Sodann wird das Rohteil 32 an oder in mindestens einer Tragstruktur oder Drückform 34 ein- bzw. aufgespannt.

Entsprechend den Fig. 5C und 5D wird das Rohteil 32 durch Spinformen bzw. Drücken unter Zuhilfenahme der Tragstruktur oder Drückform 34 zu einem Domabschnitt 22 einer Behälterstruktur 20, 20', 20'' verformt bzw. mit einem Domabschnitt 22 versehen. Bei der Ausführungsform des erfindungsgemäßen Verfahrens, das in den Fig. 5A bis 5J vorgestellt ist, handelt es sich um konvexes Spinformen bzw. Drücken.

Wie aus den Fig. 5C und 5D erkennbar ist, sind in die Drückform 34 Nuten 36 oder dergleichen eingearbeitet, um später die Versteifungen 30, vorzugsweise innenseitig, an der/den Behälterstruktur/en 20, 20', 20'' auszubilden.

Entsprechend den Fig. 5E und 5F wird nach dem konvexen Spinformen eine weitere Drückform 38 angebracht. Demzufolge wird das Rohteil 32 und/oder die Behälterstruktur 20, 20', 20'' an oder in der mindestens einen Tragstruktur oder Drückform 34 und einer damit zusammenwirkenden weiteren Tragstruktur oder Drückform 38 eingespannt. Die Drückform 38 bildet einen Gegenhalter, der eine Verspannung der Behälterstruktur 20, 20', 20'' bzw. dessen zuvor ausgebildeten Domabschnittes 22 bewirkt.

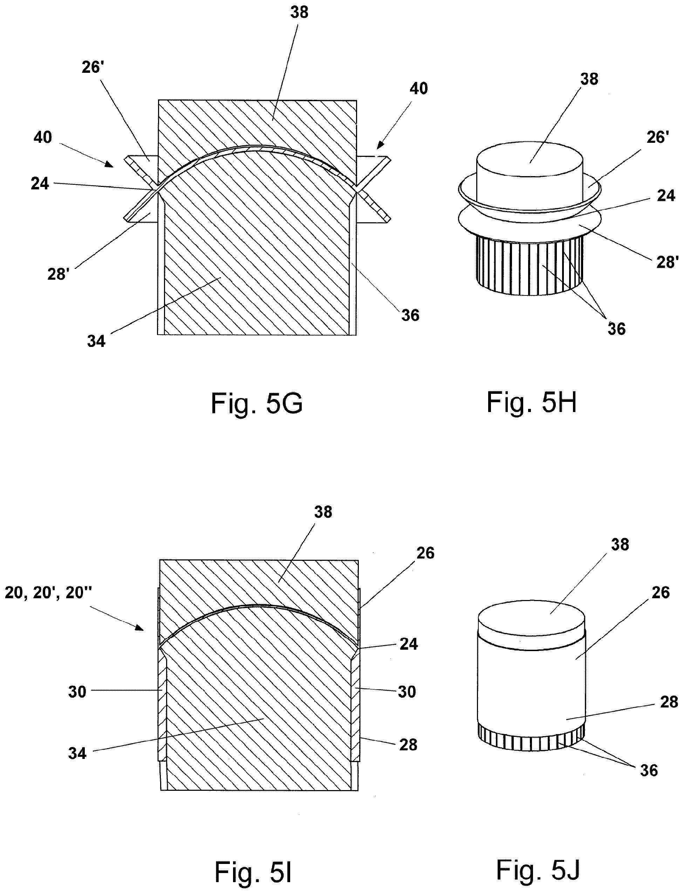

Entsprechend den Fig. 5G und 5H wird anschließend ein Rand 40 bzw. das randseitig über die Drückformen 32, 38 überstehende Material des Rohteils 32 zu einem sich an den Domabschnitt 22 anschließenden Verzweigungsabschnitt 24 und zwei an dem Verzweigungsabschnitt 24 anschließende, sich im Wesentlichen radial erstreckende Zylinderabschnitte 26', 28' der Behälterstruktur 20 durch Aufspalten mittels einer Spaltrolle (nicht gezeigt), welche den Rand 40 des Rohteils 32 beaufschlagt, verformt. Die den Rand 40 des Rohteils 32 beaufschlagende Spaltrolle weist zum Beispiel einen im Wesentlichen kegelförmigen, rautenförmigen oder scharfkantigen Querschnitt auf, gegebenenfalls zusätzlich mit einer Abrundung.

Entsprechend den Fig. 5I und 5J werden sodann die zwei sich an dem Verzweigungsabschnitt 24 anschließenden, sich im Wesentlichen radial erstreckenden Zylinderabschnitte 26', 28' der Behälterstruktur 20 zu zwei sich axial erstreckenden Zylinderabschnitten 26, 28, nämlich dem oberen Zylinderabschnitt 26 und dem unteren Zylinderabschnitt 28, der Behälterstruktur 20 (fließ-)gedrückt bzw. gedrückt oder fließgedrückt.

Sofern die Tragstruktur oder Drückform 34 und/oder die weitere Tragstruktur oder Drückform 38 entsprechende Negativ-Konturen aufweist/aufweisen, lassen sich zugleich in dem/den Zylinderabschnitt/en 26, 28, außen- und/oder innenseitig, vorzugsweise aber innenseitig, beim (Fließ-)Drücken bzw. Drücken oder Fließdrücken die Versteifungen 30, zum Beispiel in Form von (Versteifungs-)Rippen, Rippen, Versteifungsrippen, Stringern und/oder Isogrid- oder Orthogrid-Strukturen, und/oder sonstigen - auch (teilweise) glattwandigen - Strukturen erzeugen.

Zuletzt können die zwei sich axial erstreckenden Zylinderabschnitte 26, 28, nämlich der obere Zylinderabschnitt 26 und der untere Zylinderabschnitt 28, der Behälterstruktur 20 in einem weiteren (Fließ-)Drück- bzw. Drück- oder Fließdrück- bzw. Streckprozess auf ihre gewünschte Länge umgeformt werden.

Im Anschluss daran wird/werden wenigstens eine oder zwei weitere Behälterstruktur/en 20', 20'' gemäß den Schritten a) bis e) gebildet.

Nachfolgend werden die zwei jeweils einander benachbart zugewandten Behälterstrukturen 20, 20' bzw. 20', 20'' der Behälterstrukturen 20, 20', 20'' miteinander zu einem Behälter 10 gefügt. Dies kann dadurch erfolgen, dass die jeweils einander benachbarten Behälterstrukturen 20, 20' bzw. 20', 20'' miteinander unmittelbar gefügt werden. In alternativer oder kumulativer Weise ist es ebenso denkbar, die jeweils einander benachbarten Behälterstrukturen 20, 20' bzw. 20', 20'' mittelbar zu fügen, wobei mindestens ein weiteres Zylinderelement 46, 46' (vgl. Fig. 9) zwischengeordnet wird.

Das Fügen der jeweils einander benachbarten Behälterstrukturen 20, 20' bzw. 20', 20'' und/oder des mindestens einen weiteren Zylinderelementes 46, 46' miteinander erfolgt vorzugsweise durch (Fließ-)Drücken bzw. Drücken oder Fließdrücken. Eine Alternative dazu besteht auch in vorteilhafter Weise durch Schweißen, vorzugsweise Rührreibschweißen (Friction-Stir-Welding bzw. FSW).

Entsprechend den Fig. 6A bis 6L umfasst eine andere Ausführungsform eines erfindungsgemäßen Verfahrens zum Herstellen eines Behälters 10 folgende Schritte:
Entsprechend der in den Fig. 6A und 6B dargestellten Ausführungsform ist ein Rohteil 32 bereitgestellt, das vorzugsweise entsprechend der Ausführungsform nach den Fig. 5A bis 5J ausgestaltet ist. Demnach ist das Rohteil 32 insbesondere plan, ebenflächig bzw. weitgehend ebenflächig oder dergleichen und/oder im Wesentlichen kreis- oder scheibenförmig oder kreis- oder scheibenförmig ausgestaltet. Das Rohteil 32 ist, wie beim vorhergehenden Ausführungsbeispiel der Fig. 5A bis 5J, aus einem ebenflächigen Rohteil (nicht gezeigt), das (vor-)konturiert bzw. vorkonturiert oder konturiert ist, herausgearbeitet. Ohne weiteres ist es aber ebenso denkbar, eine Konturierung in das Rohteil 32 einzuarbeiten.

Gemäß den Fig. 6C und 6D wird das bereitgestellte Rohteil 32 an oder in der mindestens einen Tragstruktur oder Drückform 34 ein- bzw. aufgespannt. Sodann wird eine weitere Tragstruktur oder Drückform 38 angebracht. Demzufolge wird das Rohteil 32 an oder in der Tragstruktur oder Drückform 34 und der damit zusammenwirkenden weiteren Tragstruktur oder Drückform 38 eingespannt. Die Drückform 38 bildet einen Gegenhalter, der eine Verspannung des Rohteils 32 bewirkt.

Entsprechend den Fig. 6E und 6F wird anschließend ein Rand 40 bzw. das randseitig über die Drückformen 32, 38 überstehende Material des Rohteils 32 zu einem Verzweigungsabschnitt 24 und zwei an dem Verzweigungsabschnitt 24 anschließende, sich im Wesentlichen radial erstreckende Zylinderabschnitte 26', 28' einer Behälterstruktur 20 verformt. Die Verformung erfolgt durch Aufspalten mittels einer den Rand 40 des Rohteils 32 beaufschlagenden Spaltrolle (nicht dargestellt.) Die den Rand 40 des Rohteils 32 beaufschlagende Spaltrolle weist zum Beispiel einen im Wesentlichen kegelförmigen, rautenförmigen oder scharfkantigen Querschnitt auf, gegebenenfalls zusätzlich mit einer Abrundung.

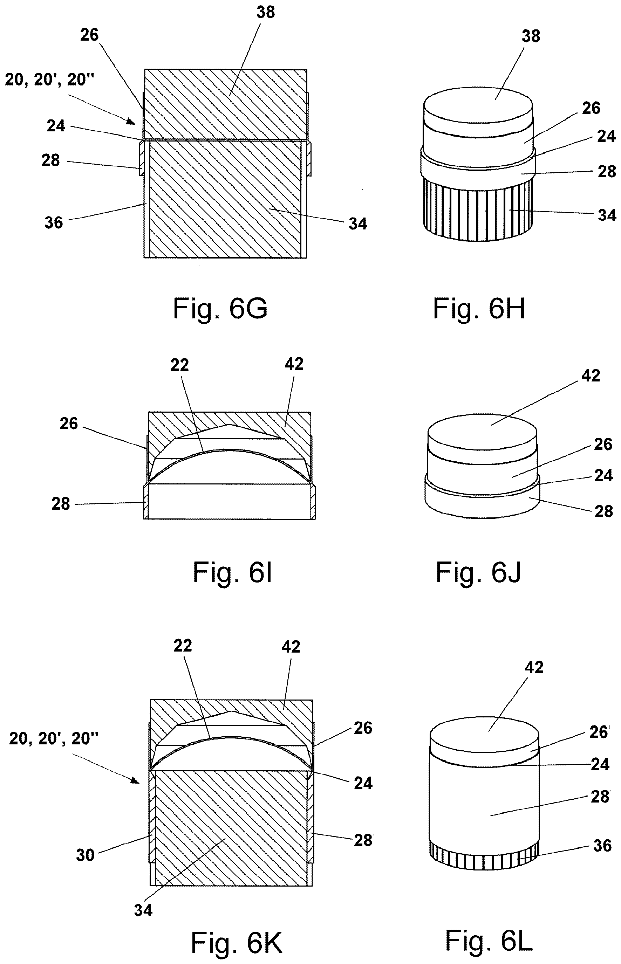

Entsprechend den Fig. 6G und 6H werden sodann die zwei sich an dem Verzweigungsabschnitt 24 anschließenden, sich im Wesentlichen radial erstreckenden Zylinderabschnitte 26', 28' der Behälterstruktur 20 zu zwei sich axial erstreckenden Zylinderabschnitten 26, 28, nämlich dem oberen Zylinderabschnitt 26 und dem unteren Zylinderabschnitt 28, der Behälterstruktur 20 (fließ-)gedrückt bzw. gedrückt oder fließgedrückt.

Sofern die Tragstruktur oder Drückform 34 und/oder die weitere Tragstruktur oder Drückform 38 entsprechende Negativ-Konturen aufweist/aufweisen, lassen sich jetzt oder später in dem/den Zylinderabschnitt/en 26, 28, außen- und/oder innenseitig, vorzugsweise aber innenseitig, beim (Fließ-)Drücken bzw. Drücken oder Fließdrücken die Versteifungen 30, zum Beispiel in Form von (Versteifungs-)Rippen, Rippen, Versteifungsrippen, Stringern und/oder Isogrid- oder Orthogrid-Strukturen, und/oder sonstigen - auch (teilweise) glattwandigen - Strukturen erzeugen.

Entsprechend den Fig. 6I und 6J wird nun das Rohteil 32 durch Spinformen bzw. Drücken zu einem Domabschnitt 22 der Behälterstruktur 20, der sich an den Verzweigungsabschnitt 24 anschließt, verformt. Bei der Ausführungsform des erfindungsgemäßen Verfahrens, das in den Fig. 6A bis 6L vorgestellt ist, ist konkaves Spinformen oder Drücken mittels einer anderen Tragstruktur oder Drückform 42 vorgesehen.

Entsprechend den Fig. 6K und 6L können zuletzt in einem weiteren (Fließ-)Drück- bzw. Drück- oder Fließdrück- bzw. Streckprozess die zwei sich axial erstreckenden Zylinderabschnitte 26, 28, nämlich der obere Zylinderabschnitt 26 und der untere Zylinderabschnitt 28, der Behälterstruktur 20 auf ihre gewünschte Länge umgeformt werden.

Alternativ zu dem Schritt entsprechend den Fig. 6G und 6H ist es im Rahmen dessen möglich, in dem/den Zylinderabschnitt/en 26, 28, außen- und/oder innenseitig, vorzugsweise aber innenseitig, beim (Fließ-)Drücken bzw. Drücken oder Fließdrücken die Versteifungen 30, zum Beispiel in Form von (Versteifungs-) Rippen, Rippen, Versteifungsrippen, Stringern und/oder Isogrid- oder Orthogrid-Strukturen, und/oder sonstigen - auch (teilweise) glattwandigen - Strukturen vorzusehen.

Im Anschluss daran wird/werden wenigstens eine oder zwei weitere Behälterstruktur/en 20', 20'' gemäß den Schritten a) bis e) gebildet.

Nachfolgend werden die zwei jeweils einander benachbart zugewandten Behälterstrukturen 20, 20' bzw. 20', 20'' der wenigstens drei Behälterstrukturen 20, 20', 20'' miteinander zu einem Behälter 10 gefügt. Dies kann dadurch erfolgen, dass die jeweils einander benachbarten Behälterstrukturen 20, 20' bzw. 20', 20'' miteinander unmittelbar gefügt werden. In alternativer oder kumulativer Weise ist es ebenso denkbar, die jeweils einander benachbarten Behälterstrukturen 20, 20' bzw. 20', 20'' mittelbar zu fügen, wobei mindestens ein weiteres Zylinderelement 46, 46' (in Fig. 9 gezeigt) zwischengeordnet wird.

Das Fügen der jeweils einander benachbarten Behälterstrukturen 20, 20' bzw. 20', 20'' und/oder des mindestens einen weiteren Zylinderelementes 46, 46' miteinander erfolgt vorzugsweise durch (Fließ-)Drücken bzw. Drücken oder Fließdrücken. Eine Alternative dazu besteht auch in vorteilhafter Weise durch Schweißen, insbesondere Rührreibschweißen (Friction-Stir-Welding bzw. FSW).

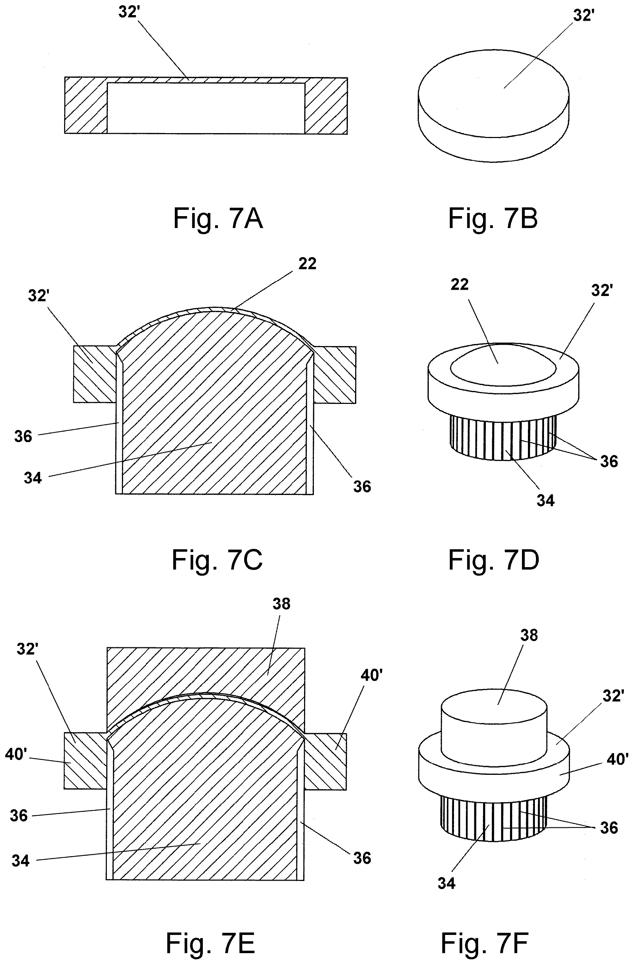

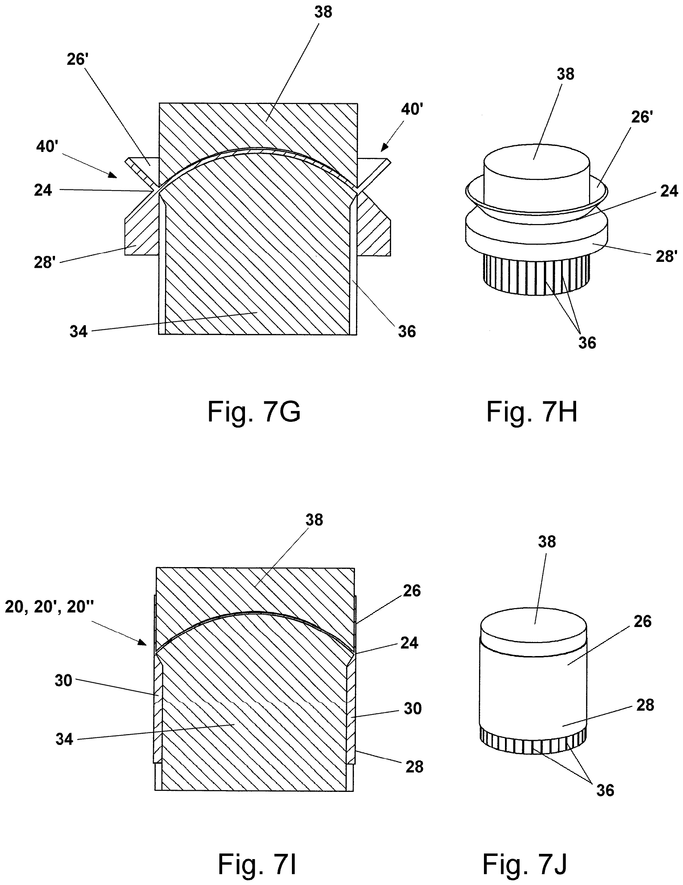

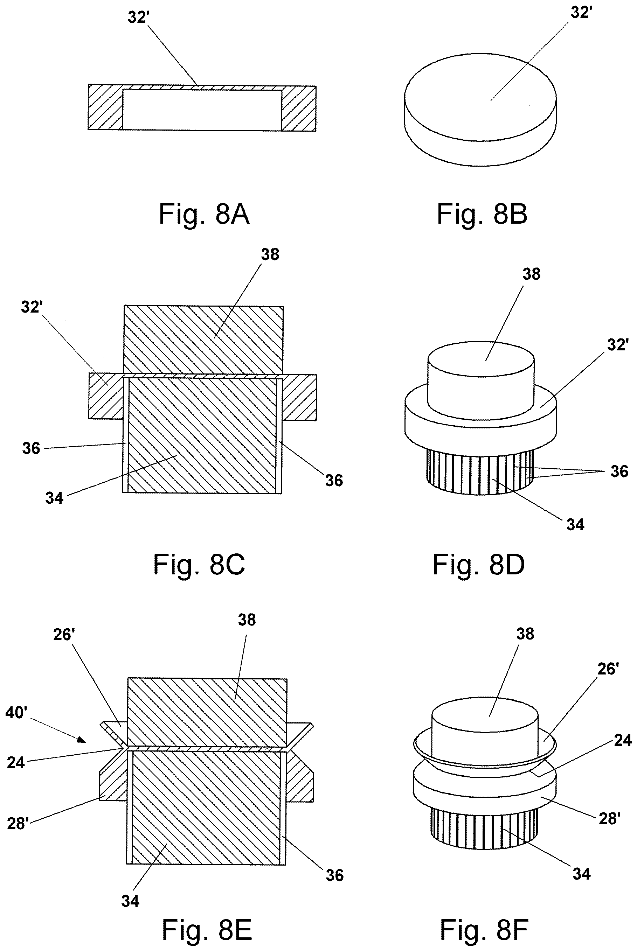

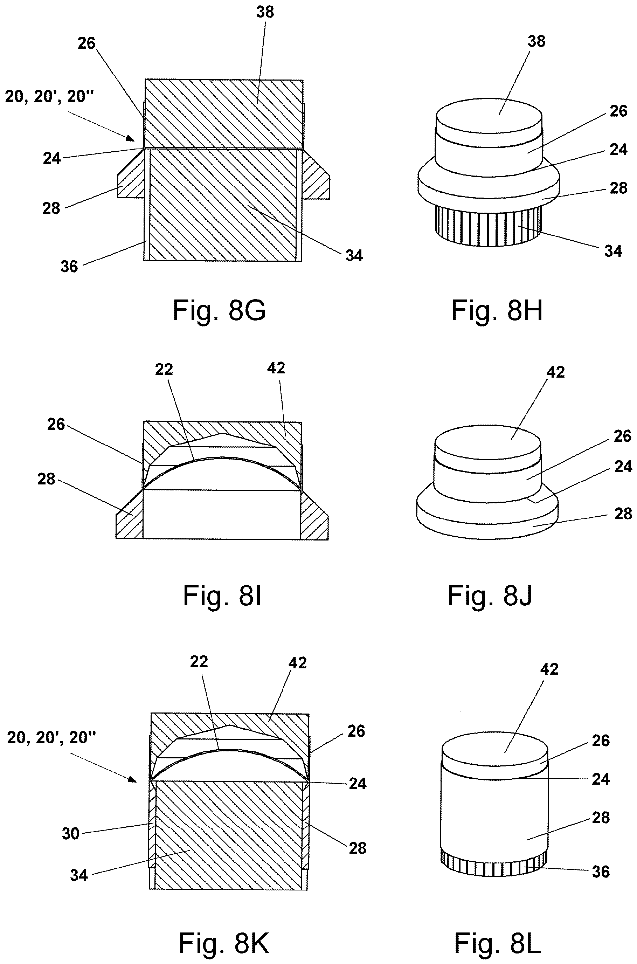

Die Herstellung der in den Fig. 1 bis 4 dargestellten Ausführungsformen des erfindungsgemäßen Behälters 10 ist darüber hinaus durch weitere Verfahren nach der Erfindung, die schematisch in den Fig. 7A bis 7J bzw. alternativ in den Fig. 8A bis 8L dargestellt sind, verwirklicht.

Die Ausführungsform des erfindungsgemäßen Verfahrens nach den Fig. 7A bis 7J unterscheidet sich von derjenigen nach den Fig. 5A bis 5J dadurch, dass in Schritt a) anstelle eines Rohteils 32, das plan, ebenflächig bzw. weitgehend ebenflächig oder dergleichen, vorzugsweise im Wesentlichen kreis- oder scheibenförmig oder kreis- oder scheibenförmig, ausgebildet ist/wird, ein Rohteil 32', das zylindrisch bzw. zylinderförmig, insbesondere in Form eines, vorzugsweise kurzen, Zylinders, ausgebildet ist/wird, bereitgestellt wird.

Das Rohteil 32' wird insbesondere aus einem ebenflächigen Rohteil (nicht näher dargestellt), zum Beispiel einem Blechzuschnitt aus Metall oder dergleichen, durch Trennen, insbesondere durch mechanisches Schneiden, Schneiden mittels Laser oder Wasserstrahl, Sägen, Fräsen oder Erodieren, herausgearbeitet und/oder sodann in bevorzugter Weise durch Spanabhebung, insbesondere durch Drehen, Fräsen und/oder Schleifen, (vor-)konturiert bzw. vorkonturiert oder konturiert. Gleichermaßen ist es jedoch möglich, das Rohteil 32' selbst mit einer Konturierung zu versehen. In alternativer Ausgestaltung kann das Rohteil 32' durch Senken, Schmieden oder Walzen in die Form eines Zylinders verbracht sein/werden.

Gleiches gilt uneingeschränkt für die Ausführungsform des Verfahrens nach der Erfindung, die in den Fig. 8A bis 8L veranschaulicht ist. Diese Ausführungsform unterscheidet sich von derjenigen nach den Fig. 6A bis 6L dadurch, dass ebenfalls in Schritt a) anstelle eines Rohteils 32, das plan, ebenflächig bzw. weitgehend ebenflächig oder dergleichen, vorzugsweise im Wesentlichen kreis- oder scheibenförmig oder kreis- oder scheibenförmig, ausgebildet ist/wird, ein Rohteil 32', das zylindrisch bzw. zylinderförmig, insbesondere in Form eines, vorzugsweise kurzen, Zylinders, ausgebildet ist/wird, bereitgestellt wird.

Die erfindungsgemäßen Verfahren, die in den Fig. 7A bis 7J und den Fig. 8A bis 8L vorgestellt sind, besitzen den zusätzlichen Vorteil, dass durch die Zylinderform bzw. die Länge des Zylinders letztlich die Menge des Materials des Randes 40' individuell bestimmbar ist, welche entsprechend der geforderten Wanddicke und/oder des gemeinsamen Überdeckungsbereiches mit einer benachbarten Behälterstruktur 20, 20', 20'' und/oder dem mindestens einen weiteren Zylinderelement 46, 46' zur Verfügung steht bzw. stehen soll.

Im Übrigen stimmen die Ausführungsformen der erfindungsgemäßen Verfahren nach den Fig. 5A bis 5J bzw. Fig. 7A bis 7J mit denjenigen nach den Fig. 6A bis 6L bzw. den Fig. 8A bis 8L überein.

Die Erfindung ist nicht auf die dargestellten Ausführungsformen beschränkt. Ohne im Einzelnen dargestellt zu sein, kann der Behälter 10 ohne weiteres auch mehr als nur eine Kammer 16 oder zwei Kammern 16, 16' mit einer damit die beiden Kammern 16, 16' unterteilenden Trennwand 18 aufweisen. So sind im Rahmen der Erfindung ebenso Behälter 10 mit drei und/oder beliebig mehr Kammern 16, 16' und Trennwänden 18 in entsprechender Anzahl denkbar. Ohne auch im Einzelnen dargestellt zu sein, ist es beispielsweise selbstverständlich auch alternativ möglich, ein Aufspalten des Randes 40, 40' bzw. des randseitig überstehenden Materials des Rohteils 32 schon vor dem konvexen Spinformen bzw. Drücken vorzusehen. Darüber hinaus ist es denkbar, dass die Tragstruktur oder Drückform 34 und/oder die weitere Tragstruktur oder Drückform 38 entsprechende Negativ-Konturen aufweist/aufweisen, um in dem/den Zylinderabschnitt/ en 26, 28, außen- und/oder innenseitig, vorzugsweise innenseitig, beim (Fließ-)Drücken bzw. Drücken oder Fließdrücken die Versteifungen 30, zum Beispiel in Form von (Versteifungs-) Rippen, Rippen, Versteifungsrippen, Stringern und/oder Isogrid- oder Orthogrid-Strukturen, und/oder sonstige - auch (teilweise) glattwandige - Strukturen zu erzeugen.

## Patentansprüche

1. Behälter zum Aufnehmen und Speichern von kryogenen Fluiden, insbesondere von kryogenen Flüssigkeiten und viskosen Stoffen, mit einem Mantel (12), welcher den Innenraum (14) des Behälters (10) mit wenigstens einer Kammer (16) bildet, **dadurch gekennzeichnet, dass** der Behälter (10) aus wenigstens zwei Behälterstrukturen (20, 20', 20'') gebildet ist, wobei die wenigstens zwei Behälterstrukturen (20, 20', 20'') jeweils aus einem Rohteil (32, 32') einteilig umgeformt sind und einen Domabschnitt (22), einen sich an den Domabschnitt (22) anschließenden Verzweigungsabschnitt (24) und zwei an dem Verzweigungsabschnitt (24) anschließende Zylinderabschnitte (26, 28; 26', 28') aufweisen und wobei die jeweils einander benachbart zugewandten Behälterstrukturen (20, 20'; 20', 20'') miteinander gefügt sind.

2. Behälter nach Anspruch 1, **dadurch gekennzeichnet, dass** der Behälter (10) einen Mantel (12) und mindestens eine Trennwand (18), welche den Innenraum (14) des Behälters (10) in wenigstens zwei einander benachbarte Kammern (16, 16') unterteilt, umfasst, wobei der Behälter (10) aus wenigstens drei Behälterstrukturen (20, 20', 20'') gebildet ist und wobei die wenigstens drei Behälterstrukturen (20, 20', 20'') jeweils aus einem Rohteil (32, 32') einteilig umgeformt sind und einen Domabschnitt (22), einen sich an den Domabschnitt (22) anschließenden Verzweigungsabschnitt (24) und zwei an dem Verzweigungsabschnitt (24) anschließende Zylinderabschnitte (26, 28; 26', 28') aufweisen und wobei die jeweils einander benachbart zugewandten Behälterstrukturen (20, 20'; 20', 20'') miteinander gefügt sind.

3. Behälter nach Anspruch 1 oder 2, **dadurch gekennzeichnet, dass** das Rohteil (32, 32') plan, ebenflächig oder dergleichen, vorzugsweise im Wesentlichen kreis- oder scheibenförmig, oder zylindrisch oder zylinderförmig, insbesondere in Form eines, vorzugsweise kurzen, Zylinders, ausgebildet ist.

4. Behälter nach einem der Ansprüche 1 bis 3, **dadurch gekennzeichnet, dass** die jeweils einander benachbarten Behälterstrukturen (20, 20'; 20', 20'') miteinander unmittelbar und/oder mittelbar über mindestens ein weiteres Zylinderelement (46, 46') gefügt sind.

5. Behälter nach einem der Ansprüche 1 bis 3, **dadurch gekennzeichnet, dass** die jeweils einander benachbarten Behälterstruktur/en (20, 20'; 20', 20'') und/oder das mindestens eine weitere Zylinderelement (46, 46') miteinander (fließ-) gedrückt oder verschweißt sind.

6. Behälter nach einem der Ansprüche 1 bis 5, **dadurch gekennzeichnet, dass** der Behälter (10), insbesondere die Behälterstruktur/en (20, 20', 20'') und/oder das mindestens eine weitere Zylinderelement (46, 46') des Behälters (10), leichtbauend ausgebildet ist/sind.

7. Behälter nach einem der Ansprüche 1 bis 6, **dadurch gekennzeichnet, dass** der Behälter (10), insbesondere die Behälterstruktur/en (20, 20', 20'') und/oder das mindestens eine weitere Zylinderelement (46, 46') des Behälters (10), aus Metall, insbesondere aus Stahl, Edelstahl, Aluminium, Titan, einer Legierung daraus und/oder einer Kombination daraus gebildet ist/sind.

8. Behälter nach einem der Ansprüche 1 bis 7, **dadurch gekennzeichnet, dass** der Domabschnitt (22) der Behälterstruktur/en (20, 20', 20'') schalenförmig, insbesondere halbkugelförmig, kugelkappenförmig, kalottenförmig, ellipsoidkallotenförmig, konisch, elliptisch, in Cassini-Form oder mit anderen Querschnittsformen ausgebildet ist.

9. Behälter nach einem der Ansprüche 1 bis 8, **dadurch gekennzeichnet, dass** der/die Zylinderabschnitt/e (26, 28; 26', 28') der Behälterstruktur/en (20, 20', 20'') und/oder das mindestens eine weitere Zylinderelement (46, 46') des Behälters (10), insbesondere durch Versteifungen (30), vorzugsweise in Form von (Versteifungs-)Rippen, Stringern und/oder Isogrid- oder Orthogrid-Strukturen, außen-und/oder innenseitig, ganz bevorzugt innenseitig, angeordnet, versteift sind.

10. Verfahren zum Herstellen eines Behälters zum Aufnehmen und Speichern von kryogenen Fluiden, insbesondere von kryogenen Flüssigkeiten und viskosen Stoffen, nach einem der Ansprüche 1 bis 9 mit einem Mantel (12), welcher den Innenraum (14) des Behälters (10) mit wenigstens einer Kammer (16) bildet, oder mit einem Mantel (12) und mindestens einer Trennwand (18), welche den Innenraum (14) des Behälters (10) in wenigstens zwei einander benachbarte Kammern (16, 16') unterteilt, umfassend folgende Schritte:
a) Bereitstellen eines Rohteils (32, 32'),
b) Einspannen des Rohteils (32, 32') an oder in mindestens einer Tragstruktur oder Drückform (34, 38, 42),
c) Verformen des Rohteils (32, 32') durch Spinformen zu einem Domabschnitt (22) einer Behälterstruktur (20),
d) Verformen eines Randes (40, 40') des Rohteils (32, 32') zu einem sich an den Domabschnitt (22) anschließenden Verzweigungsabschnitt (24) und zwei an dem Verzweigungsabschnitt (24) anschließende, sich im Wesentlichen radial erstreckende Zylinderabschnitte (26', 28') der Behälterstruktur (20) durch Aufspalten mittels einer den Rand (40, 40') des Rohteils (32, 32') beaufschlagenden Spaltrolle,
e) (Fließ-) Drücken der zwei sich an dem Verzweigungsabschnitt (24) anschließenden, sich im Wesentlichen radial erstreckenden Zylinderabschnitte (26', 28') der Behälterstruktur (20) zu zwei sich axial erstreckenden Zylinderabschnitten (26, 28) der Behälterstruktur (20),
f) Bilden von wenigstens einer oder zwei weiteren Behälterstruktur/en (20', 20'') gemäß den Schritten a) bis e),
g) Fügen der jeweils einander benachbart zugewandten Behälterstrukturen (20, 20'; 20', 20'') miteinander zu einem Behälter (10).

11. Verfahren zum Herstellen eines Behälters zum Aufnehmen und Speichern von kryogenen Fluiden, insbesondere von kryogenen Flüssigkeiten und viskosen Stoffen, nach einem der Ansprüche 1 bis 9 mit einem Mantel (12), welcher den Innenraum (14) des Behälters (10) mit wenigstens einer Kammer (16) bildet, oder mit einem Mantel (12) und mindestens einer Trennwand (18), welche den Innenraum (14) des Behälters (10) in wenigstens zwei einander benachbarte Kammern (16, 16') unterteilt, umfassend folgende Schritte:
a) Bereitstellen eines Rohteils (32, 32'),
b) Einspannen des Rohteils (32, 32') an oder in mindestens einer Tragstruktur oder Drückform (34, 28, 42),
c) Verformen eines Randes (40, 40') des Rohteils (32, 32') zu einem Verzweigungsabschnitt (24) und zwei an dem Verzweigungsabschnitt anschließende, sich im Wesentlichen radial erstreckende Zylinderabschnitte (26', 28') einer Behälterstruktur (20) durch Aufspalten mittels einer den Rand (40, 40') des Rohteils (32, 32') beaufschlagenden Spaltrolle,
d) Verformen des Rohteils (32, 32') durch Spinformen zu einem sich an den Verzweigungsabschnitt (24) anschließenden Domabschnitt (22) der Behälterstruktur (20),
e) (Fließ-) Drücken der zwei sich an dem Verzweigungsabschnitt (24) anschließenden, sich im Wesentlichen radial erstreckenden Zylinderabschnitte (26', 28') der Behälterstruktur (20) zu zwei sich axial erstreckenden Zylinderabschnitten (26, 28) der Behälterstruktur (20) nach Schritt c) oder d),
f) Bilden von wenigstens einer oder zwei weiteren Behälterstruktur/en (20', 20'') gemäß den Schritten a) bis e),
g) Fügen der jeweils einander benachbart zugewandten Behälterstrukturen (20, 20'; 20', 20'') miteinander zu einem Behälter (10).

12. Verfahren nach Anspruch 10 oder 11, **dadurch gekennzeichnet, dass** das in Schritt a) bereitzustellende Rohteil (32, 32') plan, ebenflächig oder dergleichen, vorzugsweise im Wesentlichen kreis- oder scheibenförmig, oder zylindrisch oder zylinderförmig, insbesondere in Form eines, vorzugsweise kurzen, Zylinders, ausgebildet wird.

13. Verfahren nach einem der Ansprüche 10 bis 12, **dadurch gekennzeichnet, dass** das Rohteil (32, 32') durch Trennen, insbesondere durch mechanisches Schneiden, Schneiden mittels Laser oder Wasserstrahl, Sägen, Fräsen oder Erodieren, herausgearbeitet wird.

14. Verfahren nach einem der Ansprüche 10 bis 13, **dadurch gekennzeichnet, dass** das Rohteil (32, 32') durch Spanabhebung, insbesondere durch Drehen, Fräsen und/oder Schleifen, (vor-)konturiert wird.

15. Verfahren nach einem der Ansprüche 10 bis 14, **dadurch gekennzeichnet, dass** das Rohteil (32, 32') und/oder die Behälterstruktur (20, 20', 20") an oder in der mindestens einen Tragstruktur oder Drückform (34) und einer damit zusammenwirkenden weiteren Tragstruktur oder Drückform (38, 42) eingespannt wird.

16. Verfahren nach einem der Ansprüche 10 bis 15, **dadurch gekennzeichnet, dass** der Domabschnitt (22) der Behälterstruktur (20, 20', 20'') durch konvexes oder konkaves Spinformen oder Drücken geformt wird.

17. Verfahren nach einem der Ansprüche 10 bis 16, **dadurch gekennzeichnet, dass** der Verzweigungsabschnitt (24) und die zwei Zylinderabschnitte (26', 28') der Behälterstruktur (20, 20', 20'') durch Aufspalten mittels einer den Rand (40, 40') des Rohteils (32, 32') beaufschlagenden Spaltrolle mit im Wesentlichen kegelförmigem, rautenförmigem oder scharfkantigem Querschnitt geformt werden.

18. Verfahren nach einem der Ansprüche 10 bis 17, **dadurch gekennzeichnet, dass** die zwei sich an dem Verzweigungsabschnitt (24) anschließenden Zylinderabschnitte (26', 28') der Behälterstruktur (20, 20', 20'') nach dem Aufspalten mittels der den Rand (40, 40') des Rohteils (32, 32') beaufschlagenden Spaltrolle aus der im Wesentlichen radialen Erstreckung zu zwei sich axial erstreckenden Zylinderabschnitte (26, 28) der Behälterstruktur (20, 20', 20''), insbesondere oberhalb und unterhalb des Domabschnittes (22) und des sich an den Domabschnitt (22) anschließenden Verzweigungsabschnittes (24), (fließ-)gedrückt werden.

19. Verfahren nach einem der Ansprüche 10 bis 18, **dadurch gekennzeichnet, dass** die jeweils einander benachbarten Behälterstrukturen (20, 20'; 20', 20'') miteinander unmittelbar und/oder mittelbar über mindestens ein weiteres Zylinderelement (46, 46') gefügt werden.

20. Verfahren nach einem der Ansprüche 10 bis 19, **dadurch gekennzeichnet, dass** der/die Zylinderabschnitt/e (26, 28; 26', 28') der Behälterstruktur/en (20, 20', 20'') und/oder das mindestens eine weitere Zylinderelement (46, 46') des Behälters (10), insbesondere durch innenseitige Versteifungen (30), vorzugsweise in Form von (Versteifungs-)Rippen, Stringern und/oder Isogrid- oder Orthogrid-Strukturen, die außen- und/oder innenseitig, ganz bevorzugt innenseitig, angeordnet sind, versteift werden.

21. Verfahren nach einem der Ansprüche 10 bis 20, **dadurch gekennzeichnet, dass** die jeweils einander benachbarten Behälterstrukturen (20, 20'; 20', 20") und/oder das mindestens eine weitere Zylinderelement (46, 46') miteinander (fließ-) gedrückt oder verschweißt, insbesondere durch Rührreibschweißen (Friction-Stir-Welding bzw. FSW), gefügt werden.

22. Verwendung eines Behälters nach einem der Ansprüche 1 bis 9 zum Aufnehmen und Speichern von Flüssigkeiten und viskosen Stoffen, insbesondere von kryogenen Fluiden, vorzugsweise von Sauerstoff und Wasserstoff, in Fahrzeugen, insbesondere in Luftfahrzeugen oder Fluggeräten der Luft- und Raumfahrt, vorzugsweise in Flugzeugen und Raumflugkörpern, insbesondere in Wasserfahrzeugen, vorzugsweise in einem U-Boot oder Luftkissenfahrzeug (Hovercraft), oder insbesondere in Landfahrzeugen, vorzugsweise in einem Personenkraftwagen, Lastkraftwagen oder Wohnmobil.

23. Verwendung eines Behälters nach einem der Ansprüche 1 bis 9 zum Aufnehmen und Speichern von Flüssigkeiten und viskosen Stoffen, insbesondere von kryogenen Fluiden, und von gasförmigen, flüssigen und festen Medien, vorzugsweise von Treib- oder Kraftstoffen, wie Hydrazin, Monomethylhydrazin (MMH), unsymmetrischen Dimethlyhydrazin (UDMH) oder Kerosin, Oxidationsmitteln (Oxidatoren), wie Stickstofftetroxiden oder Distickstofftetroxiden (NTO), oder Treibstoff/Oxidator-Gemischen und/oder Wasser, Trinkwasser, Brauchwasser oder Abwasser, für Tanks und Treibstofftanks von Raketen und/oder Satelliten.

## Claims

1. A container for receiving and storing liquids and viscous materials, in particular cryogenic fluids, comprising a jacket (12), which defines the interior (14) of the container (10) having chamber (16), said container (10) being constituted of at least two container structures (20, 20', 20'') and each of said at least two container structures (20, 20', 20'') being formed as one piece from a blank (32) and having a dome portion (22), a branching portion (24), which is contiguous to the dome portion (22), and two cylinder portions (26, 28; 26', 28'), which are contiguous to the branching portion (24), and the mutually facing container structures (20, 20'; 20', 20'') which are adjacent to each other being joined together.

2. Container according to claim 1, **characterized in that** the container (10) comprises a casing (12) and at least one bulkhead (18), which separates the interior space (14) of the container (10) into at least two chambers (16, 16') adjacent to each other, wherein the container (10) is formed of at least three container structures (20, 20', 20''), and wherein the at least three container structures (20, 20', 20'') are each deformed from a blank (32, 32') as a single part and have a dome section (22), a branch section (24) attaching to the dome section (22) and two cylinder sections (26, 28; 26', 28') attaching to the branch section (24), and wherein the adjacent facing container structures (20, 20'; 20', 20'') are joined together.

3. Container according to claim 1 or 2, **characterized in that** the blank (32, 32') is flat, planar or of similar shape, preferably essentially circular or disk-shaped, or cylindrical, in particular in form of a, preferably short, cylinder.

4. Container according to one of claims 1 to 3, **characterized in that** the container structures (20, 20'; 20', 20'') adjacent to each other are joined together directly and/or indirectly via at least one other cylinder element (46, 46').

5. Container according to one of claims 1 to 3, **characterized in that** the container structure(s) (20, 20'; 20', 20'') adjacent to each other and/or the at least one other cylinder element (46, 46') are flow turned and/or spun or welded together.

6. Container according to one of claims 1 to 5, **characterized in that** the container (10), in particular the container structure(s) (20, 20', 20'') and/or the at least one other cylinder element (46, 46') of the container (10) is/are designed in a lightweight way.

7. Container according to one of claims 1 to 6, **characterized in that** the container (10), in particular the container structure(s) (20, 20', 20'') and/or the at least one other cylinder element (46, 46') of the container (10) is/are made of metal, in particular of steel, stainless steel, aluminium, titanium, an alloy of those and/or a combination of those.

8. Container according to one of claims 1 to 7, **characterized in that** the dome section (22) of the container structure(s) (20, 20', 20'') is designed in a cup shape, in particular in a hemispherical, spherical cup, dome, ellipsoid dome, conical, elliptic, Cassini shape or in any other cross-sectional shapes.

9. Container according to one of claims 1 to 8, **characterized in that** the cylinder section(s) (26, 28; 26', 28') of the container structure(s) (20, 20', 20'') and/or the at least one other cylinder element (46, 46') of the container (10) are reinforced, in particular by reinforcements (30), preferably in the form of (reinforcing) ribs, stringers and/or isogrid or orthogrid structures, arranged on the outside and/or inside, most preferably on the inside.

10. Method for producing a container for receiving and storing cryogenic fluids, in particular cryogenic liquids and viscous materials according to one of claims 1 to 9, with a casing (12) forming the interior space (14) of the container (10) with at least one chamber (16), or with a casing (12) and at least one bulkhead (18), which separates the interior space (14) of the container (10) into at least two chambers (16, 16') adjacent to each other, comprising the following steps:
a) Providing a blank (32, 32'),
b) clamping the blank (32, 32') onto or into at least one support structure or spin chuck (34, 38, 42),
c) deforming the blank (32, 32') by means of spin forming into a dome section (22) of a container structure (20),
d) deforming an edge (40, 40') of the blank (32, 32') into a branch section (24) attaching to the dome section (22) and two essentially radially extending cylinder sections (26', 28') of the container structure (20) that are attaching to the branch section (24) through splitting by means of a splitting roller acting on the edge (40, 40') of the blank (32, 32'),
e) flow turning or flow pressing and/or spinning of the two essentially radially extending cylinder sections (26', 28') of the container structure (20) that are attaching to the branch section (24) into two axially extending cylinder sections (26, 28) of the container structure (20),
f) forming at least one or two additional container structure(s) (20', 20'') according to steps a) to e),
g) joining the adjacent facing container structures (20, 20', 20', 20'') into a container (10).

11. Method for producing a container for receiving and storing cryogenic fluids, in particular cryogenic liquids and viscous materials according to one of claims 1 to 9, with a casing (12) forming the interior space (14) of the container (10) with at least one chamber (16), or with a casing (12) and at least one bulkhead (18), which separates the interior space (14) of the container (10) into at least two chambers (16, 16') adjacent to each other, comprising the following steps:
a) Providing a blank (32, 32'),
b) clamping the blank (32, 32') onto or into at least one support structure or spin chuck (34, 28, 42),
c) deforming an edge (40, 40') of the blank (32, 32') into a branch section (24) and two essentially radially extending cylinder sections (26', 28') of a container structure (20) that are attaching to the branch section through splitting by means of a splitting roller acting on the edge (40, 40') of the blank (32, 32'),
d) deforming the blank (32, 32') by means of spin forming into a dome section (22) of the container structure (20) that is attaching to the branch section (24),
e) flow turning or flow pressing and/or spinning of the two essentially radially extending cylinder sections (26', 28') of the container structure (20) that are attaching to the branch section (24) into two axially extending cylinder sections (26, 28) of the container structure (20) according to step c) or d),
f) forming at least one or two additional container structure(s) (20', 20'') according to steps a) to e),
g) joining the adjacent facing container structures (20, 20', 20', 20'') into a container (10).

12. Method according to claim 10 or 11, **characterized in that** the blank (32, 32') to be provided in step a) is flat, planar or of similar shape, preferably essentially circular or disk-shaped, or cylindrical, in particular in form of a - preferably short - cylinder.

13. Method according to one of claims 10 to 12, **characterized in that** the blank (32, 32') is machined by cutting, in particular by mechanical cutting, laser or water jet cutting, sawing, milling or eroding.

14. Method according to one of claims 10 to 13, **characterized in that** the blank (32, 32') is (pre-) contoured by machining, in particular by turning, milling and/or grinding.

15. Method according to one of claims 10 to 14, **characterized in that** the blank (32, 32') and/or the container structure (20, 20', 20") is clamped onto or into the at least one support structure or spin chuck (34) and another support structure or spin chuck (38, 42) acting in conjunction with it.

16. Method according to one of claims 10 to 15, **characterized in that** the dome section (22) of the container structure (20, 20', 20'') is shaped by convex or concave spin forming or turning.

17. Method according to one of claims 10 to 16, **characterized in that** the branch section (24) and the two cylinder sections (26', 28') of the container structure (20, 20', 20'') are shaped by splitting by means of a splitting roller acting on the edge (40, 40') of the blank (32, 32'), the splitting roller having an essentially cone-shaped, diamond-shaped or sharp-edged cross-section.

18. Method according to one of claims 10 to 17, **characterized in that** the two cylinder sections (26', 28') of the container structure (20, 20', 20'') that are attaching to the branch section (24) are flow turned and/or spun after the splitting by means of the splitting roller acting on the edge (40, 40') of the blank (32, 32') from the essentially radial extension into two axially extending cylinder sections (26, 28) of the container structure (20, 20', 20''), in particular above and below the dome section (22) and the branch section (24) attaching to the dome section (22).

19. Method according to one of claims 10 to 18, **characterized in that** the container structures (20, 20'; 20', 20'') adjacent to each other are joined together directly and/or indirectly via at least one other cylinder element (46, 46').

20. Method according to one of claims 10 to 19, **characterized in that** the cylinder section(s) (26, 28; 26', 28') of the container structure(s) (20, 20', 20'') and/or the at least one other cylinder element (46, 46') of the container (10) are reinforced, in particular by reinforcements (30) on the inside, preferably in the form of (reinforcing) ribs, stringers and/or isogrid or orthogrid structures, arranged on the outside and/or inside, most preferably on the inside.

21. Method according to one of claims 10 to 20, **characterized in that** the container structures (20, 20'; 20', 20'') adjacent to each other and/or the at least one other cylinder element (46, 46') are flow turned and/or spun or welded together, in particular by friction stir welding (FSW).

22. Use of a container according to one of claims 1 to 9 for receiving and storing liquids and viscous materials, particularly cryogenic fluids, preferably oxygen and hydrogen, in vehicles, particularly in aerodynes or aircraft for application in aeronautics, preferably in aeroplanes and space aerodynes, particularly in water vehicles, preferably in a submarine or air cushion craft (Hovercraft), or particularly in land vehicles, preferably in a passenger vehicle, truck or caravan.

23. Use of a container according to one of claims 1 to 9 for receiving and storing liquids and viscous materials, particularly cryogenic fluids, and for gaseous, liquid and solid media, preferably fuels or propellants, such as hydrazine, monomethylhydrazine (MMH), unsymmetrical dimethlyhydrazine (UDMH) or kerosine, oxidizing agents (oxidizers), such as nitrogen tetroxides or dinitrogen tetroxides (NTO), or fuel/oxidizer mixes and/or (drinking) water and waste water, for tanks and fuel tanks of rockets and/or satellites.

## Revendications

1. Récipient pour contenir et stocker des fluides cryogéniques, en particulier des liquides cryogéniques et des produits visqueux, comprenant une enveloppe (12) qui forme l'enceinte intérieure (14) du récipient (10) avec au moins une chambre (16), **caractérisé en ce que** le récipient (10) est formé à partir d'au moins deux structures de récipient (20, 20', 20''), dans lequel lesdites au moins deux structures de récipient (20, 20', 20'') sont conformées d'un seul tenant chacune à partir d'une pièce brute (32, 32') et comprennent une portion en coupole (22), une portion ramifiée (24) qui se raccorde à la portion en coupole (22), et deux portions cylindriques (26, 28; 26', 28') qui se raccordent à la portion ramifiée (24), et dans lequel les structures de récipient respectivement voisines et tournées l'une vers l'autre (20, 20'; 20', 20'') sont jointes l'une à l'autre.

2. Récipient selon la revendication 1, **caractérisé en ce que** le récipient (10) comprend une enveloppe (12) et au moins une paroi de séparation (10) qui subdivise l'enceinte intérieure (14) du récipient (10) en au moins deux chambres mutuellement voisines (16, 16'), dans lequel le récipient (10) est formé à partir d'au moins trois structures de récipient (20, 20', 20''), et lesdites au moins trois structures de récipient (20, 20', 20'') sont conformées d'un seul tenant chacune à partir d'une pièce brute (32, 32') et comprennent une portion en coupole (22), une portion ramifiée (24) qui se raccorde à la portion en coupole (22), et deux portions cylindriques (26, 28; 26', 28') qui se raccordent à la portion ramifiée (24), et dans lequel les structures de récipient respectivement voisines et tournées l'une vers l'autre (20, 20'; 20', 20'') sont jointes l'une à l'autre.

3. Récipient selon la revendication 1 ou 2, **caractérisé en ce que** la pièce brute (32, 32') est réalisée sous forme plane, avec une surface régulière ou similaire, de préférence sensiblement sous forme circulaire ou sous forme de disque ou encore sous forme cylindrique ou semblable à un cylindre, en particulier sous la forme d'un cylindre, de préférence court.

4. Récipient selon l'une des revendications 1 à 3, **caractérisé en ce que** les structures de récipient respectivement voisines (20, 20'; 20', 20'') sont jointes directement les unes aux autres et/ou indirectement via au moins un autre élément cylindrique (46, 46').

5. Récipient selon l'une des revendications 1 à 3, **caractérisé en ce que** les structures de récipient respectivement voisines (20, 20'; 20', 20'') et/ou ledit au moins un autre élément cylindrique (46, 46') sont poussé(e)s par fluage les un(e)s contre les autres ou soudé(e)s.

6. Récipient selon l'une des revendications 1 à 5, **caractérisé en ce que** le récipient (10), en particulier les structures de récipient (20, 20', 20''), et/ou ledit au moins un autre élément cylindrique (46, 46') du récipient (10) est/sont réalisé(e)(s) avec une structure légère.

7. Récipient selon l'une des revendications 1 à 6, **caractérisé en ce que** le récipient (10), en particulier les structures de récipient (20, 20', 20''), et/ou ledit au moins un autre élément cylindrique (46, 46') du récipient (10) est/sont formé(e)(s) en métal, en particulier en acier, acier inoxydable, aluminium, titane, un alliage de ceux-ci et/ou une combinaison de ceux-ci.

8. Récipient selon l'une des revendications 1 à 7, **caractérisé en ce que** la portion en coupole (22) des structures de récipient (20, 20', 20'') est réalisée sous forme de coque, en particulier sous forme hémisphérique, sous forme de calotte sphérique, sous forme de calotte, sous forme de calotte ellipsoïdale, sous forme conique, sous forme elliptique, sous forme de Cassini ou encore avec d'autres formes de section transversale.

9. Récipient selon l'une des revendications 1 à 8, **caractérisé en ce que** le/les portions cylindriques (26, 28; 26', 28') des structures de récipient (20, 20', 20'') et/ou ledit au moins un autre élément cylindrique (46, 46') du récipient (10) est/sont rigidifié(es), en particulier par des moyens de rigidification (30), de préférence sous la forme de nervures de rigidification, d'entretoises et/ou de structures dites "Isogrid" ou "Orthogrid", agencées sur le côté extérieur et/ou sur le côté intérieur, et de façon tout à fait préférée sur le côté intérieur.

10. Procédé pour réaliser un récipient pour contenir et stocker des fluides cryogéniques, en particulier des liquides cryogéniques et des produits visqueux, selon l'une des revendications 1 à 9, comprenant une enveloppe (12) qui forme l'enceinte intérieure (14) du récipient (10) avec au moins une chambre (16), ou comprenant une enveloppe (12) et au moins une paroi de séparation (18) qui subdivise l'enceinte intérieure (14) du récipient (10) en au moins deux chambres mutuellement voisines (16, 16'), comprenant les étapes suivantes consistant à:
a) mettre à disposition une pièce brute (32, 32'),
b) enserrer la pièce brute (32, 32') sur ou dans au moins une structure porteuse ou un moule à repousser (34, 38, 42),
c) déformer la pièce brute (32, 32') par déformation centrifuge pour donner une portion en coupole (22) d'une structure de récipient (20),
d) déformer une bordure (40, 40') de la pièce brute (32, 32') pour donner une portion ramifiée (24) qui se raccorde à la portion en coupole (22) et deux portions cylindriques (26', 28') qui se raccordent à la portion ramifiée (24) et qui s'étendent sensiblement radialement, de la structure de récipient (20), par refente au moyen d'un rouleau de séparation qui attaque la bordure (40, 40') de la pièce brute (32, 32'),
e) repousser par fluage les deux portions cylindriques (26', 28') qui se raccordent à la portion ramifiée (24) et qui s'étendent sensiblement radialement, de la structure de récipient (20) pour donner deux portions cylindriques (26, 28), s'étendant axialement, de la structure de récipient (20),
f) former au moins une ou deux autres structures de récipient (20', 20'') d'après les étapes a) à e),
g) joindre les structures de récipient mutuellement voisines et tournées l'une vers l'autre (20, 20'; 20', 20'') l'une avec l'autre pour donner un récipient (10).

11. Procédé pour produire un récipient destiné à contenir et à stocker des fluides cryogéniques, en particulier des liquides cryogéniques est des produits visqueux, selon l'une des revendications 1 à 9, comprenant une enveloppe (12), qui forme l'enceinte intérieure (14) du récipient (10) avec au moins une chambre (16), ou comprenant une enveloppe (12) et au moins une paroi de séparation (18) qui subdivise l'enceinte intérieure (14) du récipient (10) en au moins deux chambres (16, 16') mutuellement voisines, comprenant les étapes suivantes consistant à:
a) mettre à disposition une pièce brute (32, 32',),
b) enserrer la pièce brute (32, 32') sur ou dans au moins une structure porteuse ou un moule à repousser (34, 28, 42),
c) déformer une bordure (40, 40') de la pièce brute (32, 32') pour donner une portion ramifiée (24) et deux portions cylindriques (26', 28') qui se raccordent à la portion ramifiée et qui s'étendent sensiblement radialement, d'une structure de récipient (20) par refente au moyen d'un rouleau de séparation qui attaque la bordure (40, 40') de la pièce brute (32, 32'),
d) déformer la pièce brute (32, 32') par déformation centrifuge pour donner une portion en coupole (22), qui se raccorde à la portion ramifiée (24), de la structure de récipient (20),
e) repousser par fluage les deux portions cylindriques (26', 28') qui se raccordent à la portion ramifiée (24) et qui s'étendent sensiblement radialement, de la structure de récipient (20) pour donner deux portions cylindriques (26, 28), s'étendant axialement, de la structure de récipient (20) après l'étape c) ou d),
f) former au moins une ou deux autres structures de récipient (20', 20'') d'après les étapes a) à e),
g) joindre les structures de récipient mutuellement voisines et tournées l'une vers l'autre (20, 20'; 20', 20''), l'une avec l'autre pour donner un récipient (10).

12. Procédé selon la revendication 10 ou 11, **caractérisé en ce que** la pièce brute (32, 32') à préparer dans l'étape a) est réalisée sous forme plane, avec une surface régulière ou similaire, de préférence de forme sensiblement circulaire ou en forme de disque, ou encore sous forme cylindrique ou semblable à un cylindre, en particulier sous la forme d'un cylindre, de préférence court.

13. Procédé selon l'une des revendications 10 à 12, **caractérisé en ce que** la pièce brute (32, 32') est oeuvrée par séparation, en particulier par découpe mécanique, par découpe au moyen d'un faisceau laser ou d'un jet d'eau, par sciage, par fraisage ou par érosion.

14. Procédé selon l'une des revendications 10 à 13, **caractérisé en ce que** la pièce brute (32, 32') est (préalablement) contourée par enlèvement de matière, en particulier par soudage, par fraisage et/ou par meulage.

15. Procédé selon l'une des revendications 10 à 14, **caractérisé en ce que** la pièce brute (32, 32') et/ou la structure de récipient (20, 20', 20'') est enserrée sur ou dans ladite au moins une structure porteuse ou ledit moule à repousser (34) et une autre structure porteuse ou un autre moule à repousser (38, 42) qui coopère avec celle-ci/celui-ci.

16. Procédé selon l'une des revendications 10 à 15, **caractérisé en ce que** la portion en coupole (22) de la structure de récipient (20, 20', 20'') est mise en forme par déformation centrifuge ou par compression convexe ou concave.

17. Procédé selon l'une des revendications 10 à 16, **caractérisé en ce que** la portion ramifiée (24) et les deux portions cylindriques (26', 28') de la structure de récipient (20, 20', 20'') sont mises en forme par refente au moyen d'un rouleau de séparation, qui attaque la bordure (40, 40') de la pièce brute (32, 32'), avec une section transversale de forme sensiblement conique, en forme de losange, ou à arêtes vives.

18. Procédé selon l'une des revendications 10 à 17, **caractérisé en ce que** les deux portions cylindriques (26', 28'), qui se raccordent à la portion ramifiée (24), de la structure de récipient (20, 20', 20'') sont repoussées (par fluage) après la séparation au moyen du rouleau de séparation qui attaque la bordure (40, 40') de la pièce brute (32, 32') depuis l'extension sensiblement radiale pour donner deux portions cylindriques (26, 28), s'étendant axialement, de la structure de récipient (20, 20', 20''), en particulier au-dessus et au-dessous de la portion en coupole (22) et de la portion ramifiée (24) qui se raccorde à la portion en coupole (22) .

19. Procédé selon l'une des revendications 10 à 18, **caractérisé en ce que** les structures de récipient respectivement mutuellement voisines (20, 20'; 20', 20'') sont jointes directement les unes aux autres et/ou indirectement via au moins un autre élément cylindrique (46, 46').

20. Procédé selon l'une des revendications 10 à 19, **caractérisé en ce que** le/les portions cylindriques (26, 28; 26', 28') des structures de récipient (20, 20', 20'') et/ou ledit au moins un autre élément cylindrique (46, 46') du récipient (10) est/sont rigidifié(es), en particulier par des moyens de rigidification (30) du côté intérieur, de préférence sous la forme de nervures de rigidification, d'entretoises et/ou deux structures dites "Isogrid" ou "Orthogrid", qui sont agencées sur le côté extérieur et/ou sur le côté intérieur, de façon tout à fait préférée sur le côté intérieur.

21. Procédé selon l'une des revendications 10 à 20, **caractérisé en ce que** les structures de récipient respectivement mutuellement voisines (20, 20'; 20', 20'') et/ou ledit au moins un autre élément cylindrique (46, 46') est/sont joint(es) par repoussage (par fluage) ou soudage les un(e)s aux autres, en particulier par soudage par agitation-friction ("Friction-Stir-Welding").

22. Utilisation d'un récipient selon l'une des revendications 1 à 9 destiné à contenir et à stocker des liquides et des produits visqueux, en particulier des fluides cryogéniques, de préférence de l'oxygène et de l'hydrogène, dans des véhicules, en particulier des avions ou des engins volants de l'aéronautique et de l'aérospatiale, de préférence dans des avions ou des aéronefs, en particulier dans des véhicules marins, de préférence dans un sous-marin ou un véhicule sur coussin d'air (Hovercraft), ou en particulier dans des véhicules terrestres, de préférence dans une voiture automobile, un véhicule de transport de personnes, dans des camions ou dans des mobile-homes.

23. Utilisation d'un récipient selon l'une des revendications 1 à 9 destiné à contenir et à stocker des liquides et des produits visqueux, en particulier des fluides cryogéniques, et des produits gazeux, liquides et solides, de préférence des agents de propulsion ou des carburants, comme hydrazine, monométhyle hydrazine (MMH), diméthyle hydrazine monosymétrique (UDMH) ou kérosène, agents d'oxydation (oxydateurs), comme tétraoxyde d'azote ou tétraoxyde diazoté (NTO), ou encore des mélanges carburant/oxydateur et/ou de l'eau, de l'eau potable ou des eaux usées, pour des réservoirs et des réservoirs de carburant de fusées et/ou de satellites.
